# EUROPÄISCHE PATENTSCHRIFT

(11) **EP 0 844 248 B1**
(45) Veröffentlichungstag und Bekanntmachung des Hinweises auf die Patenterteilung: **10.07.2002**
(21) Anmeldenummer: 97810676.3
(22) Anmeldetag: 17.09.1997
(51) Int. Cl.: C07F 7/18, C07F 7/12, C08L 83/00, C08L 43/00, C09K 19/40, G02F 1/1337

(54) **Vernetzbare, photoaktive Silanderivate**
Crosslinkable, photoactive silane derivatives
Dérivés de silanes photoactifs et durcissables

(30) Priorität: 28.10.1996 EP 96117246
(43) Veröffentlichungstag der Anmeldung: 27.05.1998
(73) Patentinhaber: Rolic AG, 6301 Zug (CH)
(72) Erfinder: Buchecker, Richard, 8008 Zürich (CH); Herzog, François, 68120 Richwiller (FR); Marck, Guy, 68440 Schlierbach (FR); Schuster, Andreas, 79110 Freiburg (DE)
(74) Vertreter: Liebetanz, Michael

(56) Entgegenhaltungen:
- EP-A- 0 611 786
- CREED D ET AL: "Photochemical crosslinking of novel polycinnamate main-chain mesogens" MOL. CRYST. LIQ. CRYST. (MCLCA5,00268941);88; VOL.155 (PT. B); PP.57-71, XP002089501 Univ. South. Mississippi;Dep. Chem.; Hattiesburg; 39406; MS; USA (US)
- TOMITA H ET AL: "Command surfaces 15[1]. Photoregulation of liquid crystal alignment by cinnamoyl residues on a silica surface" LIQ. CRYST. (LICRE6,02678292);96; VOL.20 (2); PP.171-6, - Februar 1996 XP002089502 Tokyo Inst. Technology;Res. Lab. Resources Utilization; Yokohama; 226; Japan (JP)

## Beschreibung

Die Erfindung betrifft neue vernetzbare, photoaktive Silanderivate mit 3-Aryl-acrylsäureestern und -amiden, sowie deren Verwendung als Orientierungsschichten für Flüssigkristalle und zum Aufbau unstrukturierter bzw. strukturierter optischer Elemente und Mehrschichtsysteme.

Der Orientierungsschicht kommt in (elektro-optischen) Flüssigkristallvorrichtungen eine besondere Bedeutung zu. Sie dient dem Zweck, eine gleichmässige und störungsfreie Ausrichtung der Moleküllängsachsen zu gewährleisten.

Zur Orientierung von Flüssigkristallmolekülen in Flüssigkristallanzeigen (LCD's) verwendet man üblicherweise uniaxial geriebene Polymerorientierungsschichten wie z.B. Polyimid. Die Reibrichtung gibt bei diesem Prozess die Orientierungsrichtung vor. Mit dem Reiben sind jedoch einige gravierende Nachteile verbunden, die optische Qualität von Flüssigkristallanzeigen stark beeinflussen können. So wird durch das Reiben Staub erzeugt, der zu optischen Fehlstellen im Display führen kann. Gleichzeitig wird die Polymerschicht elektrostatisch aufgeladen, was beispielsweise bei Thin Film Transistor (TFT)-TN-LCD's die Zerstörung der darunterliegenden Dünnschichttransistoren zur Folge haben kann. Aus diesen Gründen ist die Ausbeute an optisch einwandfreien Displays bei der LCD-Produktion bisher nicht optimal.

Ein weiterer Nachteil des Reibens besteht darin, dass es nicht möglich ist, auf einfache Weise strukturierte Orientierungsschichten herzustellen, da die Orientierungsrichtung beim Reiben nicht lokal variiert werden kann. Durch Reiben können somit hauptsächlich grossflächig einheitlich ausgerichtete Schichten hergestellt werden. Strukturierte Orientierungsschichten sind jedoch in vielen Bereichen der Displaytechnologie und der integrierten Optik von grossem Interesse. Beispielsweise lässt sich damit die Blickwinkelabhängigkeit von Twisted Nematic (TN)-LCD's verbessern.

Seit einiger Zeit sind Orientierungsschichten bekannt, bei denen die Orientierungsrichtung durch Bestrahlung mit polarisiertem Licht vorgegeben werden kann. Dadurch können die dem Reiben inhärenten Probleme umgangen werden. Zusätzlich besteht die Möglichkeit, die Orientierungsrichtung gebietsweise unterschiedlich vorzugeben und damit die Orientierungsschicht zu strukturieren.

Eine Möglichkeit der strukturierten Orientierung von Flüssigkristallen nutzt die Isomerisierungsfähigkeit bestimmter Farbstoffmoleküle aus, um photochemisch durch Einstrahlung mit polarisiertem Licht geeigneter Wellenlänge eine Vorzugsrichtung zu induzieren. Dies wird beispielsweise dadurch erreicht, dass man einem Orientierungspolymer einen Farbstoff zumischt, der dann mit polarisiertem Licht bestrahlt wird. Ein solches Guest/Host-System ist zum Beispiel in US-A-4,974,941 beschrieben. Bei diesem System werden Azobenzole in Polyimidorientierungsschichten eingemischt und anschliessend mit polarisiertem Licht bestrahlt. Flüssigkristalle, die mit der Oberfläche einer so belichteten Schicht in Kontakt sind, werden entsprechend dieser Vorzugsrichtung orientiert. Dieser Orientierungsprozess ist reversibel, d.h. durch nochmaliges Bestrahlen der Schicht mit Licht einer zweiten Polarisationsrichtung lässt sich die bereits eingeschriebene Richtung der Orientierung wieder umdrehen. Da dieser Umorientierungsprozess beliebig oft wiederholt werden kann, sind Orientierungsschichten auf dieser Basis für den Einsatz in LCD's weniger geeignet.

Eine weitere Möglichkeit zur Erzeugung hochaufgelöster Orientierungsmuster in flüssigkristallinen Schichten ist in Jpn. J. Appl. Phys. Vol. 31 (1992), 2155 beschrieben. Bei diesem Verfahren wird die durch Bestrahlung mit linear polarisiertem Licht induzierte Dimerisierung polymergebundener photoreaktiver Zimtsäuregruppen zur strukturierten Orientierung von Flüssigkristallen benutzt. Im Gegensatz zu dem oben beschriebenen reversiblen Orientierungsverfahren, wird bei den in Jpn. J. Appl. Phys. Vol. 31 (1992), 2155 beschriebenen photostrukturierbaren Orientierungsschichten ein anisotropes Polymernetzwerk aufgebaut. Diese photoorientierten Polymernetzwerke sind überall dort einsetzbar, wo strukturierte oder unstrukturierte Flüssigkristallorientierungsschichten benötigt werden. Ausser in LCD's kann man solche Orientierungsschichten beispielsweise auch zur Herstellung von sogenannten Hybridschichten verwenden, wie dies in den europäischen Patentanmeldungen EP-A- 0 611 981, EP-A- 0 689 084, EP-A-0689 065 und EP-A-0753 785 exemplifiziert wird. Mit diesen Hybridschichten aus photostrukturierten Orientierungspolymeren und vernetzbaren niedermolekularen Flüssigkristallen lassen sich optische Elemente wie etwa nichtabsorptive Farbfilter, Linear- und Zirkularpolarisatoren, optische Verzögerungsschichten, usw. verwirklichen.

In EP-A-611,786 sind Zimtsäurepolymere, die sich prinzipiell zum Aufbau von solchen anisotrop vernetzten, photostrukturierten Orientierungsschichten für Flüssigkristalle eignen, beschrieben. Diese vernetzbaren Zimtsäurederivate sind grundsätzlich über die Carboxylfunktion der Zimtsäure (Phenylacrylsäure) und einen Spacer an die Polymerhauptkette angeknüpft. Die dimerisierbare Acrylestergruppe der Zimtsäure ist in diesen Polymeren immer nach "innen" zum Spacer bzw. Polymerrückgrat hin ausgerichtet, während der aromatische Rest immer vom Polymerrückgrat weg nach "aussen" orientiert ist.

Es zeigt sich nun, dass diese Art der Ausrichtung der Zimtsäure in den bekannten Photopolymeren keineswegs optimal ist. Photochemische Konkurrenzreaktionen wirken sich störend auf die Orientierungsfähigkeit aus. Die bekannten Zimtsäurepolymere zeichnen sich durch eine ungenügende photochemische Langzeitstabilität aus. Beispielsweise führt eine längere UV-Licht Bestrahlung einer vorgefertigten Orientierungsschicht zur Zerstörung der ursprünglich vorhandenen Orientierung. Mehrfachbelichtungen, bei denen eine bereits bestehende Orientierungsschicht mit einem vorgegebenen eingeschriebenen Muster ein weiteres Mal belichtet wird, um die noch unbelichteten Bereiche in eine andere Richtung zu orientieren, können nur durchgeführt werden, wenn die zuvor belichteten Stellen durch eine Maske abgedeckt werden. Ansonsten können die bereits orientierten Bereiche der Schicht ihre Struktur durch photochemische Nebenreaktionen ganz oder teilweise wieder verlieren.

Ein weiterer Nachteil der bisher verwendeten Zimtsäurepolymere besteht darin, dass bei den durch eine einfache Belichtung mit polarisiertem Licht hergestellten Orientierungsoberflächen aus diesen Materialien kein Kippwinkel auftritt. Insbesondere für den Einsatz in LCD's muss aber neben der Orientierungsrichtung auch ein Kippwinkel durch die Orientierungsschicht vermittelt werden.

Bei den oben erwähnten uniaxial geriebenen Polymerorientierungsschichten wird dieser Kippwinkel bereits beim Reibprozess auf der Polymeroberfläche erzeugt. Bringt man einen Flüssigkristall in Kontakt mit einer solchen Oberfläche, so liegen die Flüssigkristallmoleküle nicht parallel sondern geneigt zur Oberfläche, der Kippwinkel wird also auf den Flüssigkristall übertragen. Die Grösse des Kippwinkels wird dabei sowohl durch Reibparameter wie etwa Vorschubgeschwindigkeit und Anpressdruck sowie durch die chemische Struktur des Polymers bestimmt. Für die Herstellung von Flüssigkristallanzeigen sind je nach Typ Kippwinkel zwischen 1° und 15° erforderlich. Die grösseren Kippwinkel werden insbesondere für Supertwisted Nematic (STN) LCD's benötigt, um das Entstehen von sogenannten Fingerprint-Texturen zu vermeiden. In TNund TFT-TN-LCD's wird durch den Kippwinkel die Dreh- und die Kipprichtung definiert, wodurch "Reverse Twist"- und "Reverse Tilt "-Phänomene verhindert werden. Während Reverse Twist im ungeschalteten Zustand Gebiete mit falschem Drehsinn zur Folge hat, was sich optisch in fleckigem Aussehen der Anzeige bemerkbar macht, macht sich Reverse Tilt vor allem beim Schalten des LCD's durch Verkippen der Flüssigkristalle in unterschiedliche Richtungen optisch sehr störend bemerkbar. Reverse Twist lässt sich durch Dotieren der Flüssigkristallmischung mit einem chiralen Dotierstoff geeigneter Drehrichtung verhindern. Zur Unterdrückung von Reverse Tilt gibt es bisher jedoch keine alternative Möglichkeit zum Einsatz von Orientierungsschichten mit Kippwinkel.

Vor kurzem wurde in Liq. Cryst. 20, 171 (1996) über Zimtsäureester berichtet, welche nicht, wie oben beschrieben, an ein Polymergerüst gebunden, sondern die über den Spacer mit einer Trialkoxysilangruppe verknüpft sind. Hierbei dient die Trialkoxysilangruppe zur Verankerung der Zimtsäureeinheit auf dem Substrat als Träger, beispielsweise auf Glas. Der Spacer, welcher die Trialkoxysilangruppe mit dem Zimtsäureester verknüpft, ist dabei stets in 2-Stellung (ortho-Stellung) des Zimtsäureesters angebracht. Zur Herstellung der Orientierungsschicht werden die Trialkoxysilane zunächst aus einer Lösung auf den Glasträger aufgezogen. Danach erfolgt die Orientierung durch Bestrahlung mit linear polarisiertem Licht von 259 nm Wellenlänge. Die Fähigkeit der so zubereiteten Schicht zur Orientierung von Flüssigkristallen wird einer reversiblen Z/E-Isomerisierung zugeschrieben. Werden die Zimtsäuremoleküle hingegen bei 330 nm bestrahlt, werden sie vernetzt. Dabei geht die Orientierungsfähigkeit proportional zum Vernetzungsgrad verloren.

Die auf diese Weise hergestellten Orientierungsschichten besitzen dieselben Nachteile, welche die weiter oben beschriebenen Zimtsäurepolymere aufweisen. Auch sie weisen eine ungenügende photochemische und thermische Stabilität auf, da die Z/E-Isomerisierung reversibel ist und führen daher zu Problemen der Umorientierung bei Mehrfachbelichtung. Zudem besitzen auch sie die Fähigkeit nicht, Kippwinkel zu induzieren.

Der Erfindung lag daher die Aufgabe zugrunde, photoreaktive Silane herzustellen, die die oben geschilderten Nachteile der bisher verwendeten Zimtsäurepolymere und Silane, d.h. die fehlende photochemische Langzeitstabilität und vorallem den fehlenden Tiltwinkel nach Bestrahlung mit polarisiertem Licht, nicht aufweisen und damit zur Erzeugung stabiler hochaufgelöster Orientierungsmuster befähigt sind.

Überraschenderweise wurde gefunden, dass Silane welche über einen Spacer mit 3-Aryl-acrylsäurederivaten als photoreaktiver Einheit nicht in 2-Stellung (ortho) sondern in 3- oder 4-Stellung mit dem aromatischen Ring verknüpft sind, diese Bedingung erfüllen und sich hervorragend als Orientierungsschichten für Flüssigkristalle eignen. Die Vernetzung dieser Verbindungen mit linear polarisiertem Licht führt zu einer bedeutend höheren photochemischen Stabilität der Orientierungsschicht und gleichzeitig zu einer ausgezeichneten Orientierung der Flüssigkristalle, die sich beispielsweise durch einen sehr guten Kontrast auszeichnet. Zudem können beim Belichten mit linear polarisiertem Licht Tiltwinkel erzeugt werden.

Gegenstand der vorliegenden Erfindung sind Silane der allgemeinen Formel I: 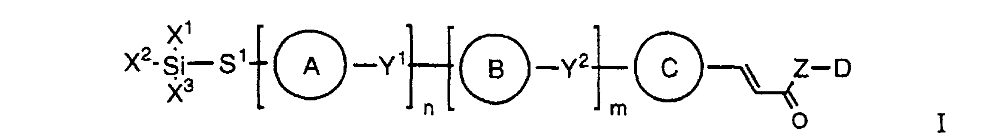 worin
- X¹, X², X³: Alkyl, Alkoxy oder Halogen bedeuten, jedoch mindestens einer dieser Reste entweder Alkoxy oder Halogen ist;
- S¹: Spacereinheiten, wie eine gegebenenfalls einfach oder mehrfach mit Fluor-, Chlor- oder Cyano-substituierte geradkettige oder verzweigte Alkylengruppierung, im Folgenden repräsentiert durch -(CH₂)ᵣ-, oder eine Kette der Formel -(CH₂)ᵣ-L¹-(CH₂)ₛ-L²-, wobei L¹ und L² unabhängig voneinander die Einfachbindung oder verknüpfende funktionelle Gruppen wie O, COO, OOC, NR², NR²-CO, CO- NR², NR²-COO, O-CO-NR², CH=CH, C≡C bedeuten und R² Wasserstoff oder niederes Alkyl;
- r und s: jeweils eine ganze Zahl von 1 bis 20 ist, mit der Massgabe, dass r + s ≤ 20;
- Ring A: unsubstituiertes oder gegebenenfalls mit Fluor, Chlor, Cyano, Alkyl oder Alkoxy substituiertes Phenylen, Pyridin-2,5-diyl, Pyrimidin-2,5-diyl, 1,3-Dioxan-2,5-diyl, Cyclohexan-1,4-diyl, Piperidin-1,4-diyl, Piperazin-1,4-diyl;
- Ring B: unsubstituiertes oder gegebenenfalls mit Fluor, Chlor, Cyano, Alkyl oder Alkoxy substituiertes Phenylen, Pyridin-2,5-diyl, Pyrimidin-2,5-diyl, 1,4- bzw. 2,6-Naphthylen, 1,3-Dioxan-2,5-diyl, Cyclohexan-1,4-diyl;
- Y¹, Y²: unabhängig voneinander eine einfache Kovalenzbindung, -(CH₂)ₜ-, -O-, -CO-, -CO-O-, -O-OC-, -NR³-, -CO-NR³-, -R³N-CO-, -(CH₂)ᵤ-O-, -O-(CH₂)ᵤ-, -(CH₂)ᵤ-NR³- oder -NR³-(CH₂)ᵤ-, worin
- R³: Wasserstoff oder niederes Alkyl;
- t: eine ganze Zahl von 1 bis 4;
- u: eine ganze Zahl von 1 bis 3;
- m, n: unabhängig voneinander 0 oder 1;
- Ring C: unsubstituiertes oder gegebenenfalls mit Fluor, Chlor, Cyano, Alkyl oder Alkoxy substituiertes Phenylen, Pyrimidin-2,5- oder 3,5-diyl, Pyridin-2,5- oder -2,4-diyl oder -2,6-diyl, 2,5-Thiophenylen, 2,5-Furanylen, 1,4- oder 2,6-Naphthylen;
- Z: -O- oder -NR⁴-, wobei R⁴ Wasserstoff oder niederes Alkyl, oder eine zweite Gruppe der Formel D, wobei
- D: gegebenenfalls mit Fluor oder Chlor substituiertes geradkettiges oder verzweigtes Alkyl mit 1 bis 20 Kohlenstoffatomen oder ein gegebenenfalls mit Fluor, Chlor, Alkyl oder Alkoxy substituierter Cycloalkylrest mit 3 bis 8 Ringatomen;
bedeuten.

Die erfindungsgemässen Silan Derivate können einzeln oder in Gemischen zur Bildung von Orientierungsschichten verwendet werden. Als Komponenten für solche Gemische können neben einer oder mehreren weiteren Verbindungen der Formel I auch andere, unvernetzbare Silan Derivate, wie sie für die Silanisierung von anorganischen, oxydhaltigen Oberflächen üblich sind, verwendet werden, beipielsweise mit Silan Derivaten der allgemeinen Formel II 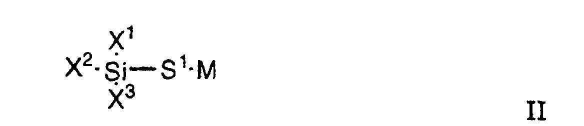 worin X¹, X², X³ und S¹ die oben genannte Bedeutung haben und M einen mesogenen Rest, oder niedriges Alkyl oder Alkoxy bedeuten. Solche Gemische, die mindestens eine Komponente der allgemeinen Formel I enthalten, sind ebenfalls Gegenstand der vorliegenden Erfindung.

Der Ausdruck "mesogener Rest" bedeutet im Rahmen der vorliegenden Erfindung eine Gruppe entsprechend der allgemeinen Formel III 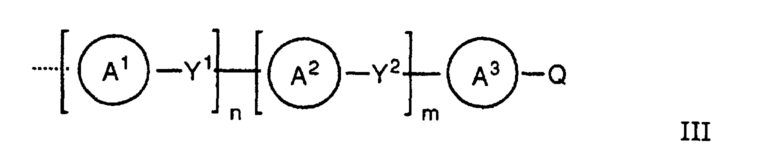 worin die Ringe
- A¹, A^{2,} A³: unabhängig voneinander unsubstituiertes oder gegebenenfalls mit Fluor, Chlor, Cyano, Alkyl oder Alkoxy substituiertes Phenylen, Pyridin-2,5-diyl, Pyrimidin-2,5-diyl, 2,6-Naphthylen, 1,3-Dioxan-2,5-diyl, Cyclohexan-1,4-diyl, wobei höchstens einer der Ringe von Phenylen oder Cyclohexylen verschieden ist;
- Q: niederes Alkyl oder Alkoxy, worin eines oder mehrere Wasserstoffatome durch Fluor ersetzt sein können, Fluor, Chlor, Cyano oder Nitro;
- n, m: sowie
- Y¹, Y²: die oben angegebene Bedeutung haben.

Vorzugsweise bedeutet M bei den Mischungskomponenten der Formel II niederes Alkyl oder Alkoxy oder einen mesogenen Rest der Formel III worin n für 0 und m für 0 oder 1 stehen. Ferner bevorzugt sind diejenigen mesogenen Reste der allgemeinen Formel III, in denen n = 0 ist und die Ringe A² und A³ unabhängig voneinander Phenylen oder Cyclohexylen, Y² eine einfache Kovalenzbindung, -CH₂CH₂-, -O-, -CH₂-O-, -O-CH₂-, -CO-Ooder -O-OC- und Q gegebenenfalls mit Fluor substituiertes niederes Alkyl oder Alkoxy, Fluor, Chlor oder Cyano bedeuten.

Ganz besonders bevorzugt sind dejenigen Mischungskomponenten der Formel II, in denen M niederes Alkyl, Alkoxy oder einen Rest der Formel III bedeutet, in dem m und n für 0 stehen und Q gegebenenfalls mit Fluor substituiertes niederes Alkyl oder Alkoxy ist.

Der Anteil an Silan Derivaten in den erfindungsgemässen Mischungen, die nicht einer Struktur der Formel I entsprechen, ist kleiner oder gleich 50 %, vorzugsweise kleiner oder gleich 30 %, insbesondere jedoch kleiner oder gleich 15 %.

Gegenstand der vorliegenden Erfindung ist auch die Verwendung der erfindungsgemässen Silan Derivate und Mischungen zur Herstellung von Orientierungsschichten für Flüssigkristalle, sowie deren Verwendung in optischen Bauelementen, insbesondere zur Herstellung von Hybridschichtelementen.

Der Ausdruck "niederes Alkyl" für sich alleine genommen oder in Kombination wie "niederes Alkoxy" bezeichnet geradkettige und verzweigte gesättigte Kohlenwasserstoffreste mit 1 bis 6, vorzugsweise mit 1 bis 3 Kohlenstoffatomen, wie Methyl, Ethyl, Propyl oder i-Propyl und dergleichen.

Der Ausdruck "Alkyl" für sich alleine genommen oder in Kombination wie "Alkoxy", bezeichnet geradkettige und verzweigte gesättigte Kohlenwasserstoff-Reste mit bis zu 30 Kohlenstoffatomen.

Bevorzugte "Spacereinheiten" sind im Rahmen der vorliegenden Erfindung eine geradkettige oder verzweigte Alkylengruppierung, repräsentiert durch -(CH₂)ᵣ-, sowie -(CH₂)ᵣ-O-, -(CH₂)ᵣ-O-(CH₂)ₛ-,-(CH₂)ᵣ-COO-(CH₂)ₛ-, -(CH₂)ᵣ-OOC-(CH₂)ₛ-, -(CH₂)ᵣ-NR²-CO-(CH₂)ₛ-, -(CH₂)ᵣ-NR²-COO-(CH₂)ₛ-, -(CH₂)ᵣ-O-(CH₂)ₛ-O-, -(CH₂)ᵣ-COO-(CH₂)ₛ-O, -(CH₂)ᵣ-OOC-(CH₂)ₛ-O, -(CH₂)ᵣ-NR²-CO-(CH₂)ₛ-O, -(CH₂)ᵣ-NR²-COO-(CH₂)ₛ-O, -(CH₂)ᵣ-CO-, -(CH₂)ᵣ-CO-O-, -(CH₂)ᵣ-O-CO-, -(CH₂)ᵣ-CO-NR²-, -(CH₂)ᵣ-NR²-CO-, wobei r und s je eine ganze Zahl von 1 bis 20, insbesondere jedoch 2 bis 12 ist, mit der Massgabe, dass r + s ≤ 20, insbesondere ≤ 15; und worin R² Wasserstoff oder niederes Alkyl bedeutet.

Beispiele von bevorzugten "Spacereinheiten" sind 1,2-Ethylen, 1,3-Propylen, 1,4-Butylen, 1,5-Pentylen, 1,6-Hexylen, 1,7-Heptylen, 1,8-Octylen, 1,9-Nonylen, 1,10-Decylen, 1,11-Undecylen, 1,12-Dodecylen, 1,3-Butylen, 3Methyl-1,3-butylen, Proylenoxy, Propylenoxycarbonyl, Propylenoyloxy, Butylenoxy, Butylenoxycarbonyl, Butylenoyloxy, Pentylenoxy, Pentylenoxycarbonyl, Pentylenoyloxy, Hexylenoxy, Hexylenoxycarbonyl, Hexylenoyloxy, Heptylenoxy, Heptylenoxycarbonyl, Heptylenoyloxy, Octylenoxy, Octylenoxycarbonyl, Octylenoyloxy, Nonylenoxy, Nonylenoxycarbonyl, Nonylenoyloxy, Decylenoxy, Decylenoxycarbonyl, Decylenoyloxy, Undecylenoxy, Undecylenoxycarbonyl, Undecylenoyloxy, Dodecylenoxy, Dodecylenoxycarbonyl, Dodecylenoyloxy, Propylenaminocarbonyl, Butylenaminocarbonyl, Pentylenaminocarbonyl, Hexylenaminocarbonyl, Heptylenamino-carbonyl, Octylenaminocarbonyl, Nonylenaminocarbonyl, Decylenaminocarbonyl, Undecylenaminocarbonyl, Dodecylenaminocarbonyl, Propylencarbonylamino, Butylencarbonylamino, Pentylencarbonylamino, Hexylencarbonylamino, Heptylencarbonylamino, Octylencarbonylamino, Nonylencarbonylamino, Decylencarbonylamino, Undecylencarbonylamino, Dodecylencarbonylamino, Propylencarbamoyloxyhexylen, 3-Propylenoxy-6-hexylen, 3-Propylenoxy-6-hexylenoxy, Propylencarbamoyloxyhexyloxy, Propylencarbamoylhexylen, Propylencarbamoylhexyloxy und dergleichen.

Besonders bevorzugte "Spacereinheiten" sind eine geradkettige Alkylengruppierung repräsentiert durch -(CH₂)ᵣ-, sowie -(CH₂)ᵣ-O-, -(CH₂)ᵣ-NH-CO-(CH₂)ₛ-, -(CH₂)ᵣ-NH-COO-(CH₂)ₛ-, -(CH₂)ᵣ-O-(CH₂)ₛ-O-, -(CH₂)ᵣ-NH-CO-(CH₂)ₛ-O, -(CH₂)ᵣ-NH-COO-(CH₂)ₛ-O, -(CH₂)ᵣ-CO-O-, -(CH₂)ᵣ-O-CO-, -(CH₂)ᵣ-CO-NH-, -(CH₂)ᵣ-NH-CO-, wobei r und s je eine ganze Zahl von 2 bis 12 und die Summe von r + s ≤ 15 ist.

Der Ausdruck "unsubstituiertes oder gegebenenfalls mit Fluor, Chlor, Cyano, Alkyl oder Alkoxy substituiertes Phenylen" umfasst im Rahmen der der vorliegenden Erfindung unsubstituiertes bzw. mit Fluor, Chlor, Cyano, Alkyl oder Alkoxy, vorzugsweise mit Fluor, Methyl, Ethyl, Propyl, Butyl, Methoxy, Ethoxy, Propoxy, Butoxy oder Cyano einfach oder mehrfach substituiertes 1,3- oder 1,4-Phenylen.

Beispiele bevorzugter Phenylenreste sind 1,3-, bzw. 1,4-Phenylen, 4-bzw. 5-Methyl-1,3-phenylen, 4- bzw. 5-Methoxy-1,3-phenylen, 4- bzw. 5-Ethyl-1,3-phenylen, 4- bzw. 5-Ethoxy-1,3-phenylen, 2- bzw. 3-Methyl-1,4-phenylen, 2- bzw. 3-Ethyl-1,4-phenylen, 2- bzw. 3-Propyl-1,4-phenylen, 2- bzw. 3-Butyl-1,4-phenylen, 2- bzw. 3-Methoxy-1,4-phenylen, 2- bzw. 3-Ethoxy-1,4-phenylen, 2- bzw. 3-Propoxy-1,4-phenylen, 2- bzw. 3-Butoxy-1,4-phenylen, 2,3-, 2,6- bzw. 3,5-Dimethyl-1,4-phenylen, 2,6- bzw. 3,5-Dimethoxy-1,4-phenylen, 2- bzw. 3-Fluor-1,4-phenylen, 2,3-, 2,6- bzw. 3,5-Difluor-1,4-phenylen, 2- bzw. 3-Chlor-1,4-phenylen, 2,3-, 2,6- bzw. 3,5-Dichlor-1,4-phenylen, 2- bzw. 3-Cyano-1,4-phenylen und dergleichen.

Bevorzugt bedeutet in den Verbindungen der Formel I
- Ring A: unsubstituiertes oder gegebenenfalls mit Fluor, Chlor, Cyano, Alkyl oder Alkoxy substituiertes Phenylen, Pyridin-2,5-diyl, Pyrimidin-2,5-diyl oder Cyclohexan-1,4-diyl;
- Ring B: unsubstituiertes oder gegebenenfalls mit Fluor, Chlor, Cyano, Alkyl oder Alkoxy substituiertes Phenylen, Pyridin-2,5-diyl, Pyrimidin-2,5-diyl, 1,4- bzw. 2,6-Naphthylen oder Cyclohexan-1,4-diyl;
- Y¹, Y²: unabhängig voneinander eine einfache Kovalenzbindung, -CH₂CH₂-, -O-, -CH₂-O-, -O-CH₂-, -CO-O- oder -O-OC-;
- m, n: unabhängig voneinander 0 oder 1;
- Ring C: unsubstituiertes oder gegebenenfalls mit Fluor, Chlor, Cyano, Alkyl oder Alkoxy substituiertes 1,3- oder 1,4-Phenylen, Pyrimidin-2,5-diyl, Pyridin-2,5-diyl, 2,5-Furanylen oder 1,4- oder 2,6-Naphthylen;
- Z: -O-; und
- D: geradkettiges oder verzweigtes Alkyl mit 1 bis 20 Kohlenstoffatomen oder ein gegebenenfalls mit Alkyl oder Alkoxy, insbesondere mit Methyl oder Methoxy, substituierter Cycloalkylrest mit 5 oder 6 Ringatomen;
und
- S¹: wie unter Formel I angegeben.

Besonders bevorzugt sind diejenigen Silanderivate der Formel I, worin n = 0;
- Ring B: unsubstituiertes oder gegebenenfalls mit Fluor, Chlor, Cyano, Alkyl oder Alkoxy substituiertes Phenylen, Pyridin-2,5-diyl, Pyrimidin-2,5-diyl oder Cyclohexan-1,4-diyl;
- Y²: eine einfache Kovalenzbindung, -CO-O- oder -O-OC-;
- m: 0 oder 1;
- Ring C: unsubstituiertes oder gegebenenfalls mit Fluor, Chlor, Cyano, Alkyl oder Alkoxy substituiertes 1,3- oder 1,4-Phenylen oder 1,4- oder 2,6-Naphthylen;
- Z: -O-; und
- D: geradkettiges oder verzweigtes Alkyl mit 1 bis 12 Kohlenstoffatomen bedeuten;
und S¹ die unter Formel I angegebene Bedeutung haben.

Die Silanderivate der Formel I zeichnen sich dadurch aus, dass sie einfach zugänglich sind. Die Methoden zur Herstellung sind dem Fachmann an sich bekannt. So können beispielsweise Vorläufer zu den Verbindungen der Formel I, welche anstelle der Silangruppe am Ende des Spacers S1 eine terminale Doppelbindung aufweisen, mit käuflichen Silanen der Formel X¹X²X³SiH durch Hydrosilylierung zu den Verbindungen der Formel I umgesetzt werden. Eine weitere Herstellungsmethode besteht darin, dass ein Silan der Formel X¹X²X³Si-(CH₂)ᵣ-N=C=O mit einer Hydroxy- oder Aminoverbindung, bei der sich die Hydroxyl- bzw. die Aminogruppe an der gewünschten Verknüpfungsstelle im Spacer oder am mit dem Spacer verknüpften Ring befindet, umsetzt. Dadurch entstehen diejenigen Verbindungen der Formel I, welche im Spacer oder an der Verknüpfungsstelle mit dem Ring eine N-CO-O- bzw. N-CO-N-Gruppierung aufweisen. Durch Umsatz der oben erwähnten Hydroxy- oder Aminoverbindungen mit Silanen der Formel X¹X²X³Si-(CH₂)ᵣ-Br lassen sich andrerseits diejenigen Verbindungen der Formel I herstellen, die im Spacer oder an der Verknüpfungsstelle mit dem Ring eine Aetherfunktion bzw. eine Alkylaminogruppe aufweisen. Durch Umsatz mit Silanen der Formel X¹X²X³Si-(CH₂)ᵣ-NHR² mit einem Säurechlorid lassen sich diejenigen Silane der Formel I herstellen, welche über eine NR²CO Gruppe im Spacer oder an der Verknüpfungsstelle mit dem Ring verfügen. Solche Herstellungsmethoden sind anhand analoger Beispiele in US 4,918,200 und US 4,861 906 beschrieben worden.

Die Silan-Vorstufen sind grösstenteils im Handel erhältlich oder können leicht aus käuflichen Silan-Bausteinen modifiziert werden. Die Zimtsäuren sind teilweise ebenfalls käuflich oder können nach literaturbekannten Verfahren wie etwa der Knoevenagel- oder der Wittig-Reaktion aus käuflichen Aldehyden oder aus Cyano-Verbindungen, durch vorherige Reduktion zu den entsprechenden Aldehyden, erhalten werden. Die Zimtsäureester oder Amide können dann aus den Zimtsäuren nach bekannten Veresterungsverfahren hergestellt werden.

Zur Herstellung von Orientierungsschichten müssen die erfindungsgemässen Silanderivate oder Gemische zunächst auf einen Träger aufgebracht werden. In der Folge werden die Silangruppen als Kopplungseinheiten an den Träger gebunden und bilden ausgesprochen dünne, oft monomolekulare Schichten. Solche Silanisierungen verschiedener, meist anorganischer Oxyde sind in der Praxis weit verbreitet und dem Fachmann durchaus geläufig. Beispiele bekannter Trägermaterialien sind Aluminiumoxyd, Titanoxyd, Siliziumoxyd (Glas oder Quarz) oder Mischoxyde wie beispielsweise Indium-Zinnoxyd (ITO). Bei den erfindungsgemässen Anwendungen für optische oder elektro-optische Vorrichtungen stehen vor allem Glas oder gegebenenfalls ein mit einer Elektrode beschichteter Träger (z.B. mit Indium-Zinn-Oxid (ITO) beschichtete Glasplatte) als Trägermaterialien im Vordergrund. Für das Aufbringen werden die Silan Derivate vorwiegend als Lösungen in einem inerten Lösungsmittel verwendet. Je nach Reaktivität der Silan-Gruppe ist eine grosse Anzahl von verschiedenen Lösungsmitteln verwendbar wie beispielsweise Benzol, Toluol, Hexan usw. oder bei den weniger reaktiven Alkoxysilanen auch Alkohole wie Methanol, Ethanol und dergleichen. Die anschliessende Beschichtung kann beispielsweise durch Eintauchen des gereinigten Trägers in die Lösung, durch Spincoating aber auch durch andere Beschichtungstechniken erfolgen. Nach dem Verflüchtigen des Lösungsmittels von der Trägerschicht erfolgt die Kopplung der Silangruppe an den Träger je nach Reaktivität meist durch Erwärmung des imprägnierten Trägers. Anschliessend können die ungebundenen Silan Anteile mit Lösungsmitteln ausgewaschen werden.

Die Schichten, welche aus Silanderivaten der Formel I oder aus Gemischen enthaltend Silanderivate der Formel I auf diese oder analoge Weise hergestellt wurden, können durch Bestrahlung mit linear polarisiertem Licht dimerisiert werden. Durch die räumlich selektive Bestrahlung der an den Träger gekoppelten Moleküleinheiten der Formel I können nun ganz bestimmte Bereiche einer Oberfläche ausgerichtet und durch die Dimerisierung gleichzeitig auch stabilisiert werden.

So können zur Herstellung von Orientierungsschichten in selektiv flächig begrenzten Bereichen die zu orientierenden Bereiche z.B. mit einer Quecksilber-Hochdruck-Lampe, einer Xenonlampe oder einem gepulsten UV-Laser unter Verwendung eines Polarisators und gegebenenfalls einer Maske zur Abbildung von Strukturen belichtet werden. Die Belichtungsdauer ist abhängig von der Leistung der einzelnen Lampen und kann von wenigen Minuten bis zu mehreren Stunden variieren. Die Dimerisierung kann aber auch durch Bestrahlung der homogenen Schicht unter Verwendung von Filtern, die z.B. nur die für die Vernetzungsreaktion geeignete Strahlung hindurchlassen, erfolgen.

Die erfindungsgemässen Silane werden durch die folgenden Beispiele weiter veranschaulicht.

### Beispiel 1:

### (E)-3-[3-Methoxy-4-(4-triethoxysilanylbutyloxy-)phenyl]acrylsäure methylester

In ein Gemisch von 1,4 g 4-(3-Butenyloxy-)benzoesäure 3-methoxy-4-[(E)2-methoxycarbonyl-vinyl-]phenylester, 0,96 ml Triethoxysilan, 20 ml Toluol und 0,055 ml Platindivinyltetramethyldisiloxan (3-3,5% in Xylol) wird während 30 Min. Luft eingeleitet und dann während 16 Std. bei 60°C gerührt. Das Reaktionsgemisch wird danach auf Raumtemperatur abgekühlt, zwischen Essigester und Wasser verteilt, die organische Phase über Magnesiumsulfat getrocknet, abfiltriert und zur Trockne eingedampft. Chromatographie an Kieselgel mit Toluol/Essigester (9:1) ergibt (E)-3-[3-Methoxy-4-(4-triethoxysilanylbuty]oxy-)phenyl]acrylsäure methylester.

In analoger Weise lassen sich folgende Silane synthetisieren:
(E)-3-[4-(4-triethoxysilanylbutyloxy-)phenyl]acrylsäure methylester;
(E)-3-[3-Fluor-4-(4-triethoxysilanylbutyloxy-)phenyl]acrylsäure methylester;
(E)-3-[3-Ethoxy-4-(4-triethoxysilanylbutyloxy-)phenyl]acrylsäure methylester;
(E)-3-[3-Hexyloxy-4-(4-triethoxysilanylbutyloxy-)phenyl]acrylsäure methylester;
(E)-3-[3-(4-triethoxysilanylbutyloxy-)phenyl]acrylsäure methylester;
(E)-3-[4-Fluor-3-(4-triethoxysilanylbutyloxy-)phenyl]acrylsäure methylester;
(E)-3-[4-Methoxy-3-(4-triethoxysilanylbutyloxy-)phenyl]acrylsäure methylester;
(E)-3-[4-Ethoxy-3-(4-triethoxysilanylbutyloxy-)phenyl]acrylsäure methylester;
(E)-3-[4-Hexyloxy-3-(4-triethoxysilanylbutyloxy-)phenyl]acrylsäure methylester;
(E)-3-[4-(8-Triethoxysilanyloctyloxy-)phenyl]acrylsäure methylester;
(E)-3-[3-Fluor-4-(8-triethoxysilanyloctyloxy-)phenyl]acrylsäure methylester;
(E)-3-[3-Methoxy-4-(8-triethoxysilanyloctyloxy-)phenyl]acrylsäure methylester;
(E)-3-[3-Ethoxy-4-(8-triethoxysilanyloctyloxy-)phenyl]acrylsäure methylester;
(E)-3-[3-Hexyloxy-4-(8-triethoxysilanyloctyloxy-)phenyl]acrylsäure methylester;
(E)-3-[3-(8-triethoxysilanyloctyloxy-)phenyl]acrylsäure methylester;
(E)-3-[4-Fluor-3-(8-triethoxysilanyloctyloxy-)phenyl]acrylsäure methylester;
(E)-3-[4-Methoxy-3-(8-triethoxysilanyloctyloxy-)phenyl]acrylsäure methylester;
(E)-3- [4-Ethoxy-3-(8-triethoxysilanyloctyloxy-)phenyl]acrylsäure methylester;
(E)-3-[4-Hexyloxy-3-(8-triethoxysilanyloctyloxy-)phenyl]acrylsäure methylester;
(E)-3-[4-(6-Triethoxysilanylhexanoyloxy-)phenyl]acrylsäure methylester;
(E)-3-[3-Fluor-4-(6-triethoxysilanylhexanoyloxy-)phenyl]acrylsäure methylester;
(E)-3-[3-Methoxy-4-(6-triethoxysilanylhexanoyloxy-)phenyl]acrylsäure methylester;
(E)-3-[3-Ethoxy-4-(6-triethoxysilanylhexanoyloxy-)phenyl]acrylsäure methylester;
(E)-3-[3-Butyloxy-4-(6-triethoxysilanylhexanoyloxy-)phenyl]acrylsäure methylester;
(E)-3-[4-(5-Triethoxysilanylpentanoyloxy-)phenyl]acrylsäure methylester;
(E)-3-[4-Fluor-3-(6-triethoxysilanylhexanoyloxy-)phenyl]acrylsäure methylester;
(E)-3-[4-Methoxy-3-(6-triethoxysilanylhexanoyloxy-)phenyl]acrylsäure methylester;
(E)-3-[4-Ethoxy-3-(6-triethoxysilanylhexanoyloxy-)phenyl]acrylsäure methylester;
(E)-3-[4-Butyloxy-3-(6-triethoxysilanylhexanoyloxy-)phenyl]acrylsäure methylester;

### Beispiel 2

### 4-(4-Triethoxysilanylbutyloxy)-benzoesäure 3-methoxy-4-[(E)-2-methoxycarbonylvinyl]-phenylester

In ein Gemisch von 1 g 4-(3-Butenyloxy-)benzoesäure 3-methoxy-4-[(E)-2-methoxycarbonyl-vinyl-]phenylester, 0,480 ml Triethoxysilan, 10 ml Toluol und 0,017 ml Platindivinyltetramethyldisiloxan (3-3,5% in Xylol) wurde während 30 Min. Luft eingeleitet und dann während 1 Std. bei 60°C gerührt. Dann wurden weitere 0,1 ml Triethoxysilan zugefügt und über 16 Std. bei 60°C nachreagieren gelassen. Das Reaktionsgemisch wurde danach auf Raumtemperatur abgekühlt, zwischen Essigester und Wasser verteilt. Die organische Phase wurde hierauf über Magnesiumsulfat getrocknet, abfiltriert und zur Trockne eingedampft. Chromatographie an 150 g Kieselgel mit Toluol/Essigester (19:1 bis 9:1) ergab 0,60 g 4-(4-Triethoxysilanylbutyloxy-)benzoesäure 3-methoxy-4-[(E)2-methoxycarbonyl-vinyl-]phenylester als farblose Flüssigkeit, λmax. (CH₂Cl₂): 279 nm.

Der als Ausgangsmaterial verwendete 4-(3-butenyloxy-)benzoesäure 3-methoxy-4-[(E)2-methoxycarbonyl-vinyl-]phenylester wurde nach folgendem Verfahren hergestellt:

### (E)-4-Hydroxy-3-methoxyzimtsäure methylester

100 g 4-Hydroxy-3-methoxyzimtsäure wurden in 1 l Methanol gelöst und mit 14,4 ml konzentrierter Schwefelsäure versetzt. Die Lösung wurde 2,5 Std. unter Rückfluss erhitzt. Anschliessend wurde die Hauptmenge des Methanols (ca. 750 ml) abdestilliert und der verbliebene Rest auf 1 l Wasser gegossen. Dann wurde dreimal mit je 500 ml Essigester extrahiert, die organischen Phasen vereinigt, zweimal mit je 250 ml 10 % Natriumbicarbonatlösung gewaschen über Natriumsulfat getrocknet, filtriert und eingedampft. Der Rückstand wurde in 800 ml Methanol gelöst, filtriert und zur Kristallisation auf -25 °C abgekühlt. Die Kristalle wurden hierauf abgenutscht, mit 100 ml kaltem Methanol gewaschen und im Hochvakuum bei Raumtemperatur getrocknet. Dies ergab 54,7 g gelbliche Kristalle.

### 4-(3-Butenyloxy-)benzoesäure 3-methoxy-4-[(E)2-methoxycarbonyl-vinyl]-phenylester

Ein Gemisch von 4,85 g 4-(3-Butenyloxy-)benzoesäure und 6 ml Thionylchlorid wurde mit 3 Tropfen Dimethylformamid versetzt und während 3 Std. auf Rückfluss erhitzt. Das überschüssige Säurechlorid wurde hierauf zurerst bei Normaldruck dann mit zunehmendem Vakuum abdestilliert, der Rückstand während 2,5 Std. unter Hochvakuum gehalten und anschliessen in 20 ml Methylenchlorid gelöst. Diese Lösung wurde unter Eiskühlung in ein Gemisch bestehend aus 5 g (E)-4-Hydroxy-3-methoxyzimtsäure methylester, 25 ml Methylenchlorid und 3,9 ml Triethylamin getropft und anschliessend bei Raumtemperatur während 60 Std. reagieren gelassen. Dann wurde die Reaktionslösung filtriert, leicht eingeengt und über 314 g Kieselgel mit Methylenchlorid chromatographiert. Kristallisation aus kaltem Ethanol ergab 7,03 g 4-(3-Butenyloxy-)benzoesäure 3-methoxy-4-[(E)2-methoxycarbonyl-vinyl-]phenylester.

Auf analoge Weise können die folgenden Silan Derivate hergestellt werden
4-(3-Triethoxysilanylpropyloxy-)benzoesäure 3-methoxy-4-[(E)2-methoxycarbonyl-vinyl-]phenylester;
4-(5-Triethoxysilanylpentyloxy-)benzoesäure 3-methoxy-4-[(E)2-methoxycarbonyl-vinyl-]phenylester;
4-(6-Triethoxysilanylhexyloxy-)benzoesäure 3-methoxy-4-[(E)2-methoxycarbonyl-vinyl-]phenylester;
4-(7-Triethoxysilanylheptyloxy-)benzoesäure 3-methoxy-4-[(E)2-methoxycarbonyl-vinyl-]phenylester;
4-(8-Triethoxysilanyloctyloxy-)benzoesäure 3-methoxy-4-[(E)2-methoxycarbonyl-vinyl-]phenylester;
4-(4-Triethoxysilanylbutyl-)benzoesäure 3-methoxy-4-[(E)2-methoxycarbonyl-vinyl-]phenylester;
4-(8-Triethoxysilanyloctyl-)benzoesäure 3-methoxy-4-[(E)2-methoxycarbonyl-vinyl-]phenylester;
4-(4-Triethoxysilanylbutyloxy-)benzoesäure 3-ethoxy-4-[(E)2-methoxycarbonyl-vinyl-]phenylester;
4-(4-Triethoxysilanylbutyloxy-)benzoesäure 3-propyloxy-4-[(E)2-methoxycarbonyl-vinyl-]phenylester;
4-(8-Triethoxysilanyloctyl-)benzoesäure 3-methoxy-4-[(E)2-ethoxycarbonyl-vinyl-]phenylester;
4-(4-Triethoxysilanylbutyloxy-)benzoesäure 3-ethoxy-4-[(E)2-ethoxycarbonyl-vinyl-]phenylester;

### Beispiel 3:

### (E)-3-{3-Methoxy-4-[6-(3-Triethoxysilanylpropylcarbamoyloxy-)hexyloxy]-phenyl}acrylsäure methylester

Ein Gemisch von 0,73 g (E)-3-[3-Methoxy-4-(6-hydroxyhexyloxy)phenyl]-acrylsäure methylester, 35 ml Methylenchlorid, 0,615 ml 3-Triethoxysilanylpropylisocyanat und 0,014 ml Dibutylzinndilaurat wurden während 60 Std. unter Rückfluss erhitzt. Danach wurde die Reaktionslösung abgekühlt, eingedampft und der Rückstand durch zweimalige Chromatographie an je 100 g Kieselgel, zuerst mit Toluol/Essigester (3:1) und dann mit Cyclohexan/Essigester (7:3) gereinigt. Dies ergab 0,9 g (E)-3-{3-Methoxy-4-[6-(3-Triethoxysilanylpropylcarbamoyloxy-)hexyloxy-]phenyl}acrylsäure methylester, λmax. (CH₂Cl₂): 323 nm (ε = 19244).

Der als Ausgangsmaterial verwendete (E)-3-[3-Methoxy-4-(6-hydroxyhexyloxy-)phenyl]acrylsäure methylester wurde nach folgendem Verfahren hergestellt:

### (E)-3-[3-Methoxy-4-(6-hydroxyhexyloxy-)phenyl]acrylsäure methylester

Ein Gemisch von 0,5 g (E)-4-Hydroxy-3-methoxyzimtsäure methylester, 10 ml 2-Butanon, 0,35 ml 6-Bromhexanol und 1 g gemahlenes Kaliumcarbonat wurde während 5 Std. unter Rückfluss erhitzt. Dann wurde das Reaktionsgemisch abgekühlt und zwischen Essigester und Wasser verteilt. Die organische Phase wurde über Magnesiumsulfat getrocknet, filtriert und eingedampft. Chromatographie an 100 g Kieselgel mit Toluol/Essigester (1:1) ergab 750 mg (E)-3-[3-Methoxy-4-(6-hydroxyhexyloxy-)phenyl]acrylsäure methylester als farbloser Festkörper, λmax. (CH₂Cl₂): 323 nm (ε = 20513).
(E)-3-{3-Methoxy-4-[5-(3-Triethoxysilanylpropylcarbamoyloxy-)-pentyloxy]phenyl}acrylsäure methylester;
(E)-3-{3-Methoxy-4-[4-(3-Triethoxysilanylpropylcarbamoyloxy-)-butyloxy]phenyl}acrylsäure methylester;
(E)-3-{3-Methoxy-4-[3-(3-Triethoxysilanylpropylcarbamoyloxy-)-propyloxy-]phenyl}acrylsäure methylester;
(E)-3-{3-Methoxy-4-[2-(3-Triethoxysilanylpropylcarbamoyloxy-)-ethoxy]phenyl}acrylsäure methylester;
(E)-3-{4-[6-(3-Triethoxysilanylpropylcarbamoyloxy)hexyloxy]-phenyl}acrylsäure methylester;
(E)-3-{3-Fluor-4-[6-(3-Triethoxysilanylpropylcarbamoyloxy-)-hexyloxy]phenyl}acrylsäure methylester;
(E)-3-{3-Ethoxy-4-[6-(3-Triethoxysilanylpropylcarbamoyloxy-)-hexyloxy]phenyl}acrylsäure methylester;
(E)-3-{3-Pentyloxy-4-[6-(3-Triethoxysilanylpropylcarbamoyloxy-)-hexyloxy-]phenyl}acrylsäure methylester;
(E)-3-{2-Methoxy-4-[6-(3-Triethoxysilanylpropylcarbamoyloxy-)-hexyloxy]phenyl}acrylsäure methylester, λmax. (CH₂Cl₂): 327 nm (ε = 18095);
(E)-3-{2-Methyl-4-[6-(3-Triethoxysilanylpropylcarbamoyloxy-)-hexyloxy]phenyl}acrylsäure methylester, (CH₂Cl₂): 315 nm (ε = 18786);
(E)-3-{3-[6-(3-Triethoxysilanylpropylcarbamoyloxy-)hexyloxy]-phenyl)acrylsäure methylester, λmax. (CH₂Cl₂): 277 nm (ε = 17200);
(E)-3-{4-Fluor-3-[6-(3-Triethoxysilanylpropylcarbamoyloxy-)hexyloxy]phenyl}acrylsäure methylester;
(E)-3-{4-Methoxy-3-[6-(3-Triethoxysilanylpropylcarbamoyloxy-)-hexyloxy]phenyl}acrylsäure methylester, λmax. (CH₂Cl₂): 322 nm (ε = 17516);
(E)-3-{4-Ethoxy-3-[6-(3-Triethoxysilanylpropylcarbamoyloxy-)hexyloxy]-phenyl}acrylsäure methylester;
(E)-3-{4-Pentyloxy-3-[6-(3-Triethoxysilanylpropylcarbamoyloxy-)-hexyloxy-]phenyl}acrylsäure methylester;
(E)-3-{4'-[6-(3-Triethoxysilanylpropylcarbamoyloxy-)hexyloxy-]biphenyl-4-yl-]acrylsäure methylester;
trans-(E)-3-{4-[4-[3-(3-Triethoxysilanylpropylcarbamoyloxy-)propyl]-cyclohexyl-]phenyl-}acrylsäure methylester;
trans-(E)-3-{4{2-[4-[3-(3-Triethoxysilanylpropylcarbamoyloxy-)propyl]-cyclohexyl-]ethyl-}phenyl-}acrylsäure methylester;
trans-(E)-3-{4{2-[4-[3-(3-Triethoxysilanylpropylcarbamoyloxy-)propyl]-cyclohexyl-]ethoxy-}phenyl-}acrylsäure methylester;
(E)-3-{3'-Fluor-4'-[6-(3-Triethoxysilanylpropylcarbamoyloxy-)hexyloxy]-biphenyl-4-yl-}acrylsäure methylester;
(E)-3-{3'-Methoxy-4'-[6-(3-Triethoxysilanylpropylcarbamoyloxy)-hexyloxy]biphenyl-4-yl-]acrylsäure methylester;
(E)-3-{3-Fluor-4'-[6-(3-Triethoxysilanylpropylcarbamoyloxy-)hexyloxy]-biphenyl-4-yl-}acrylsäure methylester;
(E)-3-{3-Methoxy-4'-[6-(3-Triethoxysilanylpropylcarbamoyloxy-)-hexyloxy]biphenyl-4-yl-}acrylsäure methylester;
(E)-3-{4'-[6-(3-Triethoxysilanylpropylcarbamoyloxy-)hexyloxy-]biphenyl-3-yl-}acrylsäure methylester;
trans-(E)-3-{3-[4-[6-(3-Triethoxysilanylpropylcarbamoyloxy-)hexyloxy]-cyclohexyl-]phenyl-}acrylsäure methylester

### Beispiel 4:

### (E)-3-{6-[6-(3-Triethoxysilanylpropylcarbamoyloxy-)hexyloxy-]naphthalin-2-yl}acrylsäure methylester

Ein Gemisch von 500 mg (E)-3-[6-(6-hydroxyhexyloxy-)naphthalin-2-yl]acrylsäure methylester, 25 ml Methylenchlorid, 0,376 ml 3-Triethoxysilanylpropylisocyanat und 0,009 ml Dibutylzinndilaurat wurden während 3 Std. unter Rückfluss erhitzt. Danach wurden weitere 0,009 ml Dibutylzinndilaurat zugefügt und während 16 Std. unter Rückfluss nachreagieren gelassen. Dann wurde die Reaktionslösung auf Raumtemperatur abgekühlt, vollständig eingedampft und der Rückstand an 150 g Kieselgel mit Ether/Hexan chromatographiert. Dies ergab 830 mg 3-{6-[6-(3-Triethoxysilanylpropylcarbamoyloxy-)hexyloxy-]naphthalin-2-yl}acrylsäure methylester als farblosen Festkörper, λmax. (CH₂Cl₂): 326 nm (ε = 26200);

Der als Ausgangsmaterial verwendete 3-[6-(6-hydroxyhexyloxy)-naphthalin-2-yl]acrylsäure methylester wurde nach folgendem Verfahren hergestellt:

### 6-Brom-2-(6-Hydroxyhexyloxy-)naphthalin

Ein Gemisch von 5 g 6-Brom-2-naphthol, 50 ml Dimethylsulfoxyd, 3,3 ml 6-Chlorhexanol, 7,1 g Kaliumjodid und 7,1 g gemahlenes und bei 80°C im Hochvakuum aktiviertes Kaliumcarbonat wurde während 16 Std auf 65 °C erhitzt. Dann wurde abgekühlt, zwischen Essigester und Wasser verteilt, die organische Phase mehrmals mit Wasser gewaschen, über Magnesiumsulfat getrocknet, filtriert und eingedampft. Chromatographie des Rückstandes an 200 g Kieselgel mit Toluol/Essigester (3:1) und anschliessende Kristallisation aus Toluol/Hexan (8:1) ergab 5,2 g 6-Brom-2-(6-Hydroxyhexyloxy-)naphthalin als farblosen Festkörper.

### (E)-3-[6-(6-hydroxyhexyloxy-)naphthalin-2-yl]acrylsäure methylester

Ein Gemisch von 5,2 g 6-Brom-2-(6-Hydroxyhexyloxy-)naphthalin, 25 ml Triethylamin, 4,3 ml Methylacrylat, 0,072 g Palladiumacetat und 0,392 g Trio-tolylphosphin wurde während 16 Std. unter Rückfluss erhitzt. Zur Vervollständigung der Reaktion wurden weitere 0,177 g Palladiumacetat, 2,5 g Tetrabutylammoniumbromid, 10 ml Dimethylformamid und 2 ml Methylacrylat zugesetzt und weitere 24 Std. zum Rückfluss erhitzt. Danach wurde das Reaktionsgemisch abgekühlt, zwischen Essigester und Wasser verteilt, die organische Phase mit Wasser gewaschen, über Magnesiumsulfat getrocknet, filtriert und eingedampft. Der Rückstand wurde an 250 g Kieselgel mit Toluol/Essigester (3:1 bis 1:1) chromatographiert und anschliessend zweimal aus Toluol kristallisiert. Dies ergab 0,63 g (E)-3-[6-(6-hydroxyhexyloxy-)naphthalin-2-yl]acrylsäure methylester als farblosen Festkörper, λmax. (CH₂Cl₂): 326 nm (ε = 27660);

In analoger Weise lassen sich folgende Silane synthetisieren:
(E)-3-(6-[2-(3-Triethoxysilanylpropylcarbamoyloxy-)ethoxy-]naphthalin-2-yl}acrylsäure methylester;
(E)-3-{6-[3-(3-Triethoxysilanylpropylcarbamoyloxy)propyloxy]-naphthalin-2-yl}acrylsäure methylester;
(E)-3-{6-[4-(3-Triethoxysilanylpropylcarbamoyloxy-)butyloxy]naphthalin-2-yl}acrylsäure methylester;
(E)-3-{6-[5-(3-Triethoxysilanylpropylcarbamoyloxy)pentyloxy]-naphthalin-2-yl}acrylsäure methylester;
(E)-3-{6-[6-(2-Triethoxysilanylethylcarbamoyloxy-)hexyloxy-]naphthalin-2-yl}acrylsäure methylester;
(E)-3-{4-[2-(3-Triethoxysilanylpropylcarbamoyloxy-)ethoxy-]naphthalin-1-yl}acrylsäure methylester;
(E)-3-{4-[3-(3-Triethoxysilanylpropylcarbamoyloxy-)propyloxy]-naphthalin-1-yl}acrylsäure methylester;
(E)-3-{4-[4-(3-Triethoxysilanylpropylcarbamoyloxy-)butyloxy]naphthalin-1-yl}acrylsäure methylester;
(E)-3-{4-[5-(3-Triethoxysilanylpropylcarbamoyloxy-)pentyloxy]-naphthalin-1-yl}acrylsäure methylester;
(E)-3-{4-[6-(2-Triethoxysilanylethylcarbamoyloxy-)hexyloxy-]naphthalin-1-yl}acrylsäure methylester;

### Beispiel 5:

### trans-(E)-3-{4'-[4-(4-Triethoxysilanylbutyl-)cyclohexyl-]biphenyl-4-yl-}acrylsäure methylester

Die Verbindung wurde analog zu Beispiel 1 aus trans-(E)-3-{4'-[4-(3-Butenyl-)cyclohexyl-]biphenyl-4-yl-}acrylsäure methylester und Triethoxysilan hergestellt

Der als Ausgangsmaterial verwendete trans-(E)-3-{4'-[4-(3-Butenyl-)-cyclohexyl-]biphenyl-4-yl-}acrylsäure methylester wurde nach folgendem Verfahren hergestellt:

### trans-4'-[4-(Butenyl)-cyclohexyl-]biphenyl-4-carboxaldehyd

Zu einer Suspension von 11,5 g trans-4'-[4-(3-Butenyl)-cyclohexyl]-biphenyl-4-carbonitril, hergestellt gemäss Mol Cryst. Liq. Cryst. 131, 327 (1985) in 150 ml Toluol wurden innerhalb von 10 Minuten bei 0 °C 38,5 ml einer Diisobutylaluminiumhydrid Lösung (20% in Toluol) getropft. Dann wurde das Reaktionsgemisch langsam auf Raumtemperatur erwärmt und noch 3,5 Stunden reagieren gelassen. Anschliessend wurde langsam 1n Salzsäure zugetropft, 1 Stunde gerührt und hierauf das Reaktionsgemisch zwischen Wasser und Methylenchlorid verteilt. Danach wurde die organische Phase mehrmals mit Wasser gewaschen, über Magnesiumsulfat getrocknet, filtriert und eingedampft. Kristallisation aus Essigester /-Methylenchlorid ergibt trans-4'-[4-(Butenyl)-cyclohexyl-]biphenyl-4-carboxaldehyd.

### trans-(E)-3-{4'-[4-(3-Butenyl-)cyclohexyl-]biphenyl-4-yl-}acrylsäure methylester

Zu einer Lösung von 6,4 ml Phosphonoessigsäuretrimethylester in 50 ml trockenem Tetrahydrofuran wurden bei 0 °C innerhalb von 10 Minuten 27,6 ml einer 1,6 n Butyllithiumlösung getropft. Es wurde 1,5 Stunden bei 0 °C gerührt und danach innerhalb von 5 Minuten bei derselben Temperatur eine Lösung von 11,5 g rohem trans-4'-[4-(3-butenyl)cyclohexyl]-biphenyl-4-carboxaldehyd in 50 ml trockenem Tetrahydrofuran zugetropft. Anschliessend wurde langsam auf Raumtemperatur erwärmt und während 15 Stunden reagieren gelassen. Das Reaktionsgemisch wurde dann zwischen Methylenchlorid und 1n Salzsäure verteilt, die organische Phase mit gesättigter Natriumbicarbonatlösung und Wasser gewaschen, über Magnesiumsulfat getrocknet und eingedampft. Chromatographie an Kieselgel mit Essigester / Hexan (1:9) und anschliessende mehrfache Umkristallisation aus Hexan / Essigester ergab trans-(E)-3-{4'-[4-(3-Butenyl-) cyclohexyl-]biphenyl-4-yl-}acrylsäure methylester.

Auf analoge Weise können die folgenden Silan Derivate hergestellt werden:
trans-(E)-3-{4'-[4-(2-Triethoxysilanylethyl-)cyclohexyl-]biphenyl-4-yl-}acrylsäure methylester;
(E)-3-[4'-(4-Triethoxysilanylbutyl-)biphenyl-4-yl-]acrylsäure methylester;
trans-(E)-3-{4-[4-(4-Triethoxysilanylbutyl-)cyclohexyl-]phenyl-}acrylsäure methylester;
trans-(E)-3-{4{2-[4-(4-Triethoxysilanylbutyl-)cyclohexyl-]ethyl-}phenyl-}acrylsäure methylester;
trans-(E)-3-{4{2-[4-(4-Triethoxysilanylbutyl-)cyclohexyl-]ethoxy-}phenyl-}acrylsäure methylester;
(E)-3-[3'-Fluor-4'-(4-triethoxysilanylbutyl-)biphenyl-4-yl-]acrylsäure methylester;
(E)-3-[3'-Methoxy-4'-(4-triethoxysilanylbutyl-)biphenyl-4-yl-]acrylsäure methylester;
(E)-3-[3-Fluor-4'-(4-triethoxysilanylbutyl-)biphenyl-4-yl-]acrylsäure methylester;
(E)-3-[3-Methoxy-4'-(4-triethoxysilanylbutyl-)biphenyl-4-yl-]acrylsäure methylester;
(E)-3-[4'-(4-Triethoxysilanylbutyl-)biphenyl-3-yl-]acrylsäure methylester;
trans-(E)-3-{3-[4-(4-Triethoxysilanylbutyl-)cyclohexyl-]phenyl-}acrylsäure methylester;

### Beispiel 6:

### 4-(4-Trichlorsilanylbutyloxy-)benzoesäure 3-methoxy-4-[(E)2-methoxycarbonylvinyl-]phenylester

Zu einer Lösung von 0,1 g H₂PtCl₆ in 20 ml trockenem Tetrahydrofuran werden unter Rühren 5 ml Trichlorsilan zugegeben. Dazu wird vorsichtig eine Lösung von 14,8 g 4-(3-Butenyloxy-)benzoesäure 3-methoxy-4-[(E)2-methoxycarbonylvinyl-]phenylester, gelöst in 20 ml trockenem Tetrahydrofuran getropft. Danach wird während 5 Std. bei Raumtemperatur und dann während 16 Std. bei 50 °C gerührt. Das Reaktionsgemisch wird im Wasserstrahlvakuum eingeengt und an der Oelpumpe mit Kühlfalle unter reduziertem Druck vom restlichen Lösungsmittel und Trichlorsilan vollständig befreit. Dies ergibt rohen 4-(4-Trichlorsilanylbutyloxy-)benzoesäure 3-methoxy-4-[(E)2-methoxycarbonylvinyl-]phenylester, der zur Aufbewahrung in trockenem Tetrahydrofuran gelöst wird.

Der als Ausgangsmaterial erforderliche 4-(3-Butenyloxy-)benzoesäure 3-methoxy-4-[(E)2-methoxycarbonylvinyl-]phenylester wird gemäss Beispiel 2 hergestellt.

Auf analoge Weise können die folgenden Silan Derivate hergestellt werden:
4-(4-Trichlorsilanylbutyloxy-)benzoesäure 4-[(E)2-methoxycarbonylvinyl-]phenylester;
4-(4-Trichlorsilanylbutyloxy-)benzoesäure 3-[(E)2-methoxycarbonylvinyl-]phenylester;
3-(4-Trichlorsilanylbutyloxy-)benzoesäure 4-Methoxy-3-[(E)2-methoxycarbonylvinyl-]phenylester;
(E)-3-[4-(4-Trichlorsilanylbutyloxy-)phenyl]acrylsäure methylester;
(E)-3-[3-Fluor-4-(4-trichlorsilanylbutyloxy-)phenyl]acrylsäure methylester;
(E)-3-[3-Methoxy-4-(4-trichlorsilanylbutyloxy-)phenyl]acrylsäure methylester;
(E)-3-[3-Ethoxy-4-(4-trichlorsilanylbutyloxy-)phenyl]acrylsäure methylester;
(E)-3-[3-Butyloxy-4-(4-trichlorsilanylbutyloxy-)phenyl]acrylsäure methylester;
(E)-3-[3-(4-Trichlorsilanylbutyloxy-)phenyl]acrylsäure methylester;
(E)-3-[4-Fluor-3-(4-trichlorsilanylbutyloxy-)phenyl]acrylsäure methylester;
(E)-3-[4-Methoxy-3-(4-trichlorsilanylbutyloxy-)phenyl]acrylsäure methylester;
(E)-3-[4-Ethoxy-3-(4-trichlorsilanylbutyloxy-)phenyl]acrylsäure methylester;
(E)-3-[4-Pentyloxy-3-(4-trichlorsilanylbutyloxy-)phenyl]acrylsäure methylester;
(E)-3-[4-(8-Trichlorsilanyloctyloxy-)phenyl]acrylsäure methylester;
(E)-3-[3-Fluor-4-(8-trichlorsilanyloctyloxy-)phenyl]acrylsäure methylester;
(E)-3-[3-Methoxy-4-(8-trichlorsilanyloctyloxy-)phenyl]acrylsäure methylester;
(E)-3-[3-Ethoxy-4-(8-trichlorsilanyloctyloxy-)phenyl]acrylsäure methylester;
(E)-3-[3-Pentyloxy-4-(8-trichlorsilanyloctyloxy-)phenyl]acrylsäure methylester;
(E)-3-[3-(8-Trichlorsilanyloctyloxy-)phenyl]acrylsäure methylester;
(E)-3-[4-Fluor-3-(8-trichlorsilanyloctyloxy-)phenyl]acrylsäure methylester;
(E)-3-[4-Methoxy-3-(8-trichlorsilanyloctyloxy-)phenyl]acrylsäure methylester;
(E)-3-[4-Ethoxy-3-(8-trichlorsilanyloctyloxy-)phenyl]acrylsäure methylester;
(E)-3-[4-Butyloxy-3-(8-trichlorsilanyloctyloxy-)phenyl]acrylsäure methylester;
(E)-3-[4-(6-Trichlorsilanylhexanoyloxy-)phenyl]acrylsäure methylester;
(E)-3-[3-Fluor-4-(6-trichlorsilanylhexanoyloxy-)phenyl]acrylsäure methylester;
(E)-3-[3-Methoxy-4-(6-trichlorsilanylhexanoyloxy-)phenyl]acrylsäure methylester;
(E)-3-[3-Ethoxy-4-(6-trichlorsilanylhexanoyloxy-)phenyl]acrylsäure methylester;
(E)-3-[3-Butyloxy-4-(6-trichlorsilanylhexanoyloxy-)phenyl]acrylsäure methylester;
(E)-3-[4-(5-Trichlorsilanylpentanoyloxy-)phenyl]acrylsäure methylester;
(E)-3-[4-Fluor-3-(6-trichlorsilanylhexanoyloxy-)phenyl]acrylsäure methylester;
(E)-3-[4-Methoxy-3-(6-trichlorsilanylhexanoyloxy-)phenyl]acrylsäure methylester;
(E)-3-[4-Ethoxy-3-(6-trichlorsilanylhexanoyloxy-)phenyl]acrylsäure methylester;
(E)-3-[4-Butyloxy-3-(6-trichlorsilanylhexanoyloxy-)phenyl]acrylsäure methylester;
(E)-3-[4'-(4-Trichlorsilanylbutyloxy-)biphenyl-4-yl-]acrylsäure methylester;
trans-(E)-3-{4-[4-(4-Trichlorsilanylbutyl-)cyclohexyl-]phenyl-}acrylsäure methylester;
trans-(E)-3-{4{2-[4-(4-Trichlorsilanylbutyl-)cyclohexyl-]ethyl-}phenyl-}acrylsäure methylester;
trans-(E)-3-{4{2-[4-(4-Trichlorsilanylbutyl-)cyclohexyl-]ethoxy-}phenyl-}acrylsäure methylester;
(E)-3-[3'-Fluor-4'-(4-Trichlorsilanylbutyloxy-)biphenyl-4-yl-]acrylsäure methylester;
(E)-3-[3'-Methoxy-4'-(4-Trichlorsilanylbutyloxy-)biphenyl-4-yl-]acrylsäure methylester;

### Beispiel 7:

### Herstellung einer photovernetzbaren Schicht

0,02 g 3-{6-[6-(3-Triethoxysilanylpropylcarbamoyloxy-)hexyloxy-]-naphthalin-2-yl}acrylsäure methylester, wurden in 2 ml des Lösungsmittelgemisches von Toluol und Ethanol (1:1) gelöt. In diese Lösung wurde eine gereinigte Glasplatte (19 x 26 mm) während 30 Min. eingetaucht und danach während weiteren 30 Min. bei einer Temperatur von 100 °C getempert. Hierauf wurde die so behandelte Glasplatte während 10 Min im Ultraschallbad in Toluol gereinigt.

### Beispiel 8:

### Herstellung einer Orientierungsschicht für Flüssigkristalle

Die in Beispiel 7 beschriebene beschichtete Glasplatte wurde während drei Minuten mit dem linear polarisierten UV-Licht einer Quecksilber-Hochdrucklampe bestrahlt. Danach wurde auf die belichtete Schicht eine Flüssigkristallschicht durch spin-coating aufgebracht. Im Polarisationsmikroskop konnte hierauf eine uniaxial doppelbrechende Schicht orientierter Flüssigkristallmoleküle beobachtet werden. Mit Hilfe eines Kippkompensators wurde festgestellt, dass die Orientierungsrichtung mit der beim Belichten der Silanschicht eingestellten Polarisationsrichtung des UV-Lichtes übereinstimmt.

### Beispiel 9:

### Herstellung einer Orientierungsschicht mit definiertem Kippwinkel

Zwei gemäss Beispiel 7 mit 3-{6-[6-(3-Triethoxysilanylpropylcarbamoyloxy-)hexyloxy-]naphthalin-2-yl}acrylsäure methylester beschichtete Glasplatten wurden mit linear polarisiertem UV-Licht während 9 Min. bestrahlt, wobei die Einfallsrichtung des Lichtes gegenüber der Plattennormalen um 70° geneigt war. Die Polarisationsrichtung des Lichtes lag dabei in der durch die Lichteinfallsrichtung und der Plattennormalen aufgespannten Ebene. Die beiden Platten wurden danach mit der belichteten Seite nach innen zu einer Flüssigkristallzelle mit einem Plattenabstand von 20 µm so zusammengebaut, dass die beim Belichten der Platten durch Polarisation und Lichteinfall ausgezeichneten Richtungen einander parallel waren. Dann wurde die Zelle mit der Flüssigkristallmischung 3010 von ROLIC AG bei einer Temperatur von 100 °C gefüllt, wobei sich die Flüssigkristallmischung während des Füllvorgangs in der isotropen Phase befand. Hierauf wurde die Zelle allmählich mit einer Rate von 1 °C/Min. auf Raumtemperatur abgekühlt. Zwischen gekreuzten Polarisatoren erkannte man nun eine einheitlich orientierte Flüssigkristallschicht. Der mit Hilfe der Kristalldrehmethode gemessene Kippwinkel dieser Parallelzelle betrug 1,3°.

## Patentansprüche

1. Silane der allgemeinen Formel I, 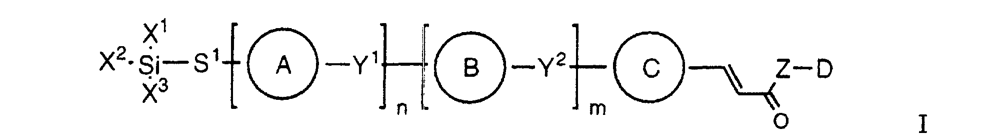 worin
X¹, X², X³ Alkyl, Alkoxy oder Halogen bedeuten, jedoch mindestens einer dieser Reste entweder Alkoxy oder Halogen ist;
S¹ Spacereinheiten, wie eine gegebenenfalls einfach oder mehrfach mit Fluor-, Chlor- oder Cyano-substituierte geradkettige oder verzweigte Alkylengruppierung, im Folgenden repräsentiert durch -(CH₂)ᵣ-, oder eine Kette der Formel -(CH₂)ᵣ-L¹-(CH₂)ₛ-L²-, wobei L¹ und L² unabhängig voneinander die Einfachbindung oder verknüpfende funktionelle Gruppen wie O, COO, OOC, NR², NR²-CO-, CO-NR², NR²-COO, O-CO-NR², CH=CH, C≡C bedeuten, wobei R² Wasserstoff oder niederes Alkyl;
r und s jeweils eine ganze Zahl von 1 bis 20 ist, mit der Massgabe, dass r + 5 ≤ 20;
Ring A unsubstituiertes oder gegebenenfalls mit Fluor, Chlor, Cyano, Alkyl oder Alkoxy substituiertes 1,3- oder 1,4-Phenylen, Pyridin-2,5-diyl, Pyrimidin-2,5-diyl, 1,3-Dioxan-2,5-diyl, Cyclohexan-1,4-diyl, Piperidin-1,4-diyl, Piperazin-1,4-diyl;
Ring B unsubstituiertes oder gegebenenfalls mit Fluor, Chlor, Cyano, Alkyl oder Alkoxy substituiertes 1,3- oder 1,4-Phenylen, Pyridin-2,5-diyl, Pyrimidin-2,5-diyl, 1,4- bzw. 2,6-Naphthylen, 1,3-Dioxan-2,5-diyl, Cyclohexan-1,4-diyl;
Y¹, Y² unabhängig voneinander eine einfache Kovalenzbindung, -(CH₂)ₜ-, -O-, -CO-, -CO-O-, -O-OC-, -NR³-, -CO-NR³-, -R³N-CO-, -(CH₂)ᵤ-O-, -O-(CH₂)ᵤ-, -(CH₂)ᵤ-NR³- oder -NR³-(CH₂)ᵤ-, worin
R³ Wasserstoff oder niederes Alkyl;
t eine ganze Zahl von 1 bis 4;
u eine ganze Zahl von 1 bis 3;
m, n unabhängig voneinander 0 oder 1;
Ring C unsubstituiertes oder gegebenenfalls mit Fluor, Chlor, Cyano, Alkyl oder Alkoxy substituiertes 1,3- oder 1,4-Phenylen, Pyrimidin-2,5- oder 3,5-diyl, Pyridin-2,5- oder -2,4-diyl oder -2,6-diyl, 2,5-Thiophenylen, 2,5-Furanylen, 1,4- oder 2,6-Naphthylen;
Z -O- oder -NR⁴-, wobei R⁴ Wasserstoff oder niederes Alkyl, oder eine zweite Gruppe der Formel D, wobei
D gegebenenfalls mit Fluor oder Chlor substituiertes geradkettiges oder verzweigtes Alkyl mit 1 bis 20 Kohlenstoffatomen oder ein gegebenenfalls mit Fluor, Chlor, Alkyl oder Alkoxy substituierter Cycloalkylrest mit 3 bis 8 Ringatomen;
bedeuten.

2. Silane der allgemeinen Formel I nach Anspruch 1, worin
X¹, X², X³, S¹, m und n die in Anspruch 1 angegebene Bedeutung haben und
Ring A unsubstituiertes oder gegebenenfalls mit Fluor, Chlor, Cyano, Alkyl oder Alkoxy substituiertes 1,3- oder 1,4-Phenylen, Pyridin-2,5-diyl, Pyrimidin-2,5-diyl oder Cyclohexan-1,4-diyl;
Ring B unsubstituiertes oder gegebenenfalls mit Fluor, Chlor, Cyano, Alkyl oder Alkoxy substituiertes 1,3- oder 1,4-Phenylen, Pyridin-2,5-diyl, Pyrimidin-2,5-diyl, 1,4- bzw. 2,6-Naphthylen oder Cyclohexan-1,4-diyl;
Y¹, Y² unabhängig voneinander eine einfache Kovalenzbindung, -CH₂CH₂-, -O-, -CH₂-O-, -O-CH₂-, -CO-O- oder -O-OC-;
Ring C unsubstituiertes oder gegebenenfalls mit Fluor, Chlor, Cyano, Alkyl oder Alkoxy substituiertes 1,3- oder 1,4-Phenylen, Pyrimidin-2,5-diyl, Pyridin-2,5-diyl, 2,5-Furanylen oder 1,4- oder 2,6-Naphthylen;
Z -O-; und
D geradkettiges oder verzweigtes Alkyl mit 1 bis 20 Kohlenstoffatomen oder ein gegebenenfalls mit Alkyl oder Alkoxy, insbesondere mit Methyl oder Methoxy, substituierter Cycloalkylrest mit 5 oder 6 Ringatomen;
bedeuten.

3. Silane der allgemeinen Formel I nach Anspruch 1 oder 2, worin
X¹, X², X³, S¹ und m die in Anspruch 1 angegebene Bedeutung haben und
n 0;
Ring B unsubstituiertes oder gegebenenfalls mit Fluor, Chlor, Cyano, Alkyl oder Alkoxy substituiertes 1,3- oder 1,4-Phenylen, Pyridin-2,5-diyl, Pyrimidin-2,5-diyl oder Cyclohexan-1,4-diyl;
Y² eine einfache Kovalenzbindung, -CO-O- oder -O-OC-;
Ring C unsubstituiertes oder gegebenenfalls mit Fluor, Chlor, Cyano, Alkyl oder Alkoxy substituiertes 1,3- oder 1,4-Phenylen oder 1,4- oder 2,6-Naphthylen;
Z -O-; und
D geradkettiges oder verzweigtes Alkyl mit 1 bis 12 Kohlenstoffatomen;
bedeuten.

4. Silane nach Anspruch 3,
(E)-3-[3-Methoxy-4-(4-triethoxysilanylbutyloxy-)phenyl]acrylsäure methylester;
4-(4-Triethoxysilanylbutyloxy-)benzoesäure 3-methoxy-4-[(E)2-methoxycarbonylvinyl-]phenylester;
(E)-3-{2-Methoxy-4-[6-(3-Triethoxysilanylpropylcarbamoyloxy-)hexyloxy]-phenyl}acrylsäure methylester;
(E)-3-{6-[6-(3-Triethoxysilanylpropylcarbamoyloxy-)hexyloxy]-naphthalin-2-yl}acrylsäure methylester;
trans-(E)-3-{4'-[4-(4-Triethoxysilanylbutyl-)cyclohexyl-]-biphenyl-4-yl-)-acrylsäure methylester;
4-(4-Trichlorsilanylbutyloxy-)benzoesäure 3-methoxy-4-[(E)2-methoxycarbonylvinyl-]phenylester.

5. Vernetzbare Gemische bestehend aus mindestens 2 Komponenten, wovon mindestens eine Komponente eine Verbindung der in Anspruch 1 definierten Formel I ist.

6. Vernetzbare Gemische gemäss Anspruch 5, **dadurch gekennzeichnet, dass** sie neben einer oder mehreren Verbindungen der Formel I, eine oder mehrere Verbindungen der allgemeinen Formel II enthalten, 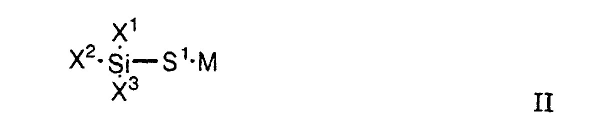 worin
X¹, X², X³, S¹ die in Anspruch 1 angegebene Bedeutung haben und
M niederes Alkyl, Alkoxy oder einen mesogenen Rest der allgemeinen Formel III bedeutet, 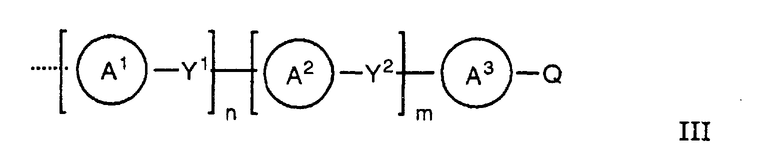 worin
Y¹, Y² , m und n die in Anspruch 1 angegebene Bedeutung haben und
A¹, A² A³ unabhängig voneinander unsubstituiertes oder gegebenenfalls mit Fluor, Chlor, Cyano, Alkyl oder Alkoxy substituiertes Phenylen, Pyridin-2,5-diyl, Pyrimidin-2,5-diyl, 2,6-Naphthylen, 1,3-Dioxan-2,5-diyl, Cyclohexan-1,4-diyl, wobei höchstens einer der Ringe von Phenylen oder Cyclohexylen verschieden ist;
Q niederes Alkyl oder Alkoxy, worin eines oder mehrere Wasserstoffatome durch Fluor ersetzt sein können, Fluor, Chlor, Cyano oder Nitro;
bedeuten.

7. Vernetzbare Gemische gemäss Anspruch 6, worin
n 0;
m 0 oder 1;
A² und A³ unabhängig voneinander Phenylen oder Cyclohexylen;
Y² eine einfache Kovalenzbindung, -CH₂CH₂-, -O-, -CH₂-O-, -O-CH₂-, -CO-O- oder -O-OC- und
Q gegebenenfalls mit Fluor substituiertes niederes Alkyl oder Alkoxy, Fluor, Chlor oder Cyano bedeuten.

8. Vernetzbare Gemische gemäss Anspruch 7, worin
m 0;
A³ Phenylen oder Cyclohexylen;
Q gegebenenfalls mit Fluor substituiertes niederes Alkyl oder Alkoxy bedeuten.

9. Verwendung von Verbindungen gemäss einem der Ansprüche 1 bis 4 zur Herstellung von Orientierungsschichten für Flüssigkristalle, sowie deren Verwendung in optischen Bauelementen, insbesondere zur Herstellung von Hybridschichtelementen.

10. Verwendung von vernetzbaren Gemischen gemäss einem der Ansprüche 5 -8 zur Herstellung von Orientierungsschichten für Flüssigkristalle, sowie deren Verwendung in optischen Bauelementen, insbesondere zur Herstellung von Hybridschichtelementen.

## Claims

1. Silanes of general formula I 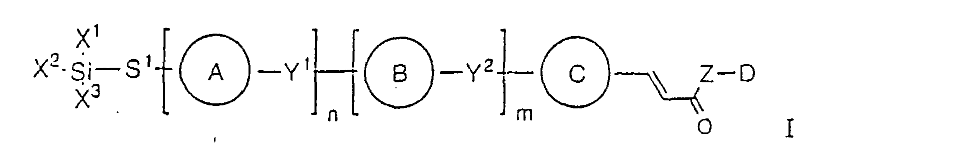 wherein
X¹, X² and X³ are alkyl, alkoxy or halogen, at least one of which: is either alkoxy or halogen;
S¹ is a spacer unit, such as a straight-chain or branched alkylene grouping represented hereinafter by -(CH₂)ᵣ-, which is optionally substituted by one or more fluorine, chlorine or cyano substituents, or a chain of the formula-(CH₂)ᵣ-L¹-(CH₂)ₛ-L²- in which L¹ and L² each independently is a single bond or cross-linking functional group selected from the group consisting of O, COO, OOC, NR², NR²-CO, CO-NR², NR²-COO, O-CO-NR², CH=CH or C≡C wherein R² is hydrogen or lower alkyl;
r and s are each a whole number of 1 to 20, with the proviso that r + s ≤ 20;
ring A is 1,3- or 1,4-phenylene which is unsubstituted or optionally substituted with fluorine, chlorine, cyano, alkyl or alkoxy, pyridine-2,5-diyl, pyrimidine-2,5-diyl, 1,3-dioxane-2,5-diyl, cyclohexane-1,4-diyl, piperidine-1,4-diyl or piperazine-1,4-diyl;
ring B is 1,3- or 1,4-phenylene which is unsubstituted or optionally substituted with fluorine, chlorine, cyano, alkyl or alkoxy, pyridine-2,5-diyl, pyrimidine-2,5-diyl, 1,4- or 2,6-naphthylene, 1,3-dioxane-2,5-diyl or cyclohexane-1,4-diyl;
Y¹, Y² each independently is a single covalent bond, -(CH₂)ₜ-, -O-, -CO-, -CO-O-, -O-OC-, -NR³-, -CO-NR³-, -R³N-CO-, -(CH₂)ᵤ-O-, -O-(CH₂)ᵤ-, -(CH₂)ᵤ-NR³- or -NR³-(CH₂)ᵤ-, wherein
R³ is hydrogen or lower alkyl;
t is a whole number of 1 to 4,
u is a whole number of 1 to 3;
m, n each independently is 0 or 1;
ring C is 1,3- or 1,4-phenylene which is unsubstituted : or optionally substituted with fluorine, chlorine, cyano, alkyl or alkoxy, pyrimidine-2,5- or 3,5-diyl, pyridine-2,5- or -2,4-diyl or -2,6-diyl, 2,5-thiophenylene, 2,5-furanylene or 1,4- or 2,6-naphthylene; and
Z is -O- or -NR⁺, in which R⁴ is hydrogen or lower alkyl or a second group of formula D, in which
D is straight-chain or branched alkyl with 1 to 20 carbon atoms optionally substituted with fluorine or chlorine or a cycloalkyl residue with 3 to 8 ring atoms optionally substituted with fluorine, chlorine, alkyl or alkoxy.

2. Silanes of general formula I according to claim 1, wherein
X¹, X², X³, S¹, m and n have the significance given in claim 1 and
ring A is 1,3- or 1,4-phenylene which is unsubstituted; or optionally substituted with fluorine, chlorine, cyano, alkyl or alkoxy, pyridine-2,5-diyl, pyrimidine-2,5-diyl or cyclohexane-1,4-diyl;
ring B is 1,3- or 1,4-phenylene which is unsubstituted or optionally substituted with fluorine, chlorine, cyano, alkyl or alkoxy, pyridine-2,5-diyl, pyrimidine-2,5-diyl, 1,4- or 2,6-naphthylene or cyclohexane-1,4-diyl;
Y¹, Y² each independently is a single covalent bond, -CH₂CH₂-, -O-, -CH₂-O-, -O-CH₂-, -CO-O- or -O-OC-;
ring C is 1,3- or 1,4-phenylene which is unsubstituted or optionally substituted with fluorine, chlorine, cyano, alkyl or alkoxy, pyrimidine-2,5-diyl, pyridine-2,5-diyl, 2,5-furanylene or 1,4- or 2,6-naphthylene;
Z is -O-; and
D is straight-chain or branched alkyl with 1 to 20 carbon atoms or a cycloalkyl residue with 5 or 6 ring atoms optionally substituted with alkyl or alkoxy, especially with methyl or methoxy.

3. Silanes of general formula I according to claim 1 or 2, wherein
X¹, X², X³, S¹ and m have the significance given in claim 1 and
n is O;
ring B is 1,3- or 1,4-phenylene which is unsubstituted or optionally substituted with fluorine, chlorine, cyano, alkyl or alkoxy, pyridine-2,5-diyl, pyrimidine-2,5-diyl or cyclohexane-1,4-diyl;
Y² is a single convalent bond, -CO-O- or -O-OC-;
ring C is 1,3- or 1,4-phenylene which is unsubstituted or optionally substituted with fluorine, chlorine, cyano, alkyl or alkoxy, or 1,4- or 2,6-naphthylene;
Z is -O-; and
D is straight-chain or branched alkyl with 1 to 12 carbon atoms.

4. Silanes according to claim 3, wherein the compound is selected from the group consisting of
Methyl (E)-3-[3-methoxy-4-(4-triethoxysilanylbutyloxy)phenyl]-acrylate;
3-methoxy-4-[(E)2-methoxycarbonylvinyl]phenyl 4-(4-triethoxysilanylbutyloxy)benzoate;
methyl (E)-3-{3-methoxy-4-[6-(3-triethoxysilanylpropylcarbamoyloxy)hexyloxy]phenyl}acrylate;
methyl (E)-3-{6-[6-(3-triethoxysilanylpropylcarbamoyloxy)hexyloxy]naphthalen-2-yl}acrylate;
methyl trans-(E)-3-{4'-[4-(4-triethoxysilanylbutyl)cyclohexyl]-biphenyl-4-yl}acrylate;
3-methoxy-4-[(E)2-methoxycarbonylvinyl]phenyl 4-(4-trichlorosilanylbutyloxy)benzoate.

5. A cross-linkable mixture comprising at least two components, wherein at least one component is a compound of formula I defined in claim 1.

6. A cross-linkable mixture according to claim 5, which contains, in addition to one or more compounds of formula I, one or more compounds of general formula II 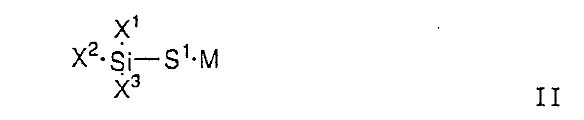 wherein
X¹, X², X³ and S¹ have the significance given in claim 1 and
M is lower alkyl or alkoxy or a mesogenic residue ; of general formula III 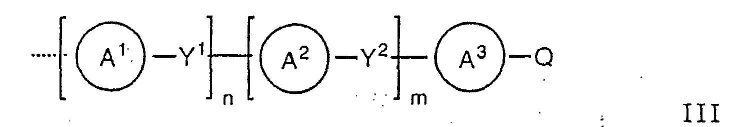
wherein
Y¹, Y², m and n have the significance given in claim 1 and
A¹,A² and A³ each independently is phenylene which is unsubstituted or optionally substituted with fluorine, chlorine, cyano, alkyl or alkoxy, pyridine-2,5-diyl, pyrimidine-2,5-diyl, 2,6-naphthylene, 1,3-dioxane-2,5-diyl or cyclohexane-1,4-diyl, with a maximum of one of the rings being different from phenylene or cyclohexylene; and
Q is lower alkyl or alkoxy in which one more hydrogen atoms can be replaced by fluorine, or fluorine, chlorine, cyano or nitro.

7. A cross-linkable mixture according to claim 6, wherein
n is 0;
m is 0 or 1;
A² and A³ each independently is phenylene or cyclohexylene;
Y² is a single covalent bond, -CH₂CH₂-, -O- -CH₂- O-, -O-CH₂-, -CO-O- or -O-OC-; and
Q is lower alkyl or alkoxy optionally substituted with fluorine or is fluorine, chlorine or cyano.

8. A cross-linkable mixture according to claim 7, wherein
m is O;
A³ is phenylene or cyclohexylene; and
Q is lower alkyl or alkoxy optionally substituted with fluorine

9. The use of compounds according to any one of claims 1 to 4 for the production of orienting layers for liquid crystals, as well as their use in optical components, especially for the production of hybrid layer elements.

10. The use of cross-linkable mixtures according to any one of claims 5 to 8 for the production of orienting layers for liquid crystals, as well as their use in optical components, especially for the production of hybrid layer elements.

## Revendications

1. Silanes de formule générale I 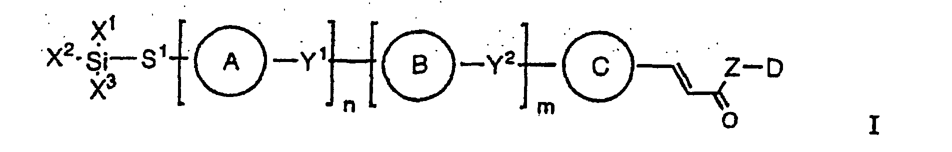 dans laquelle
X¹, X², X³ représentent un alkyle, alcoxy ou halogène, cependant au moins un des ces groupes est un alcoxy ou halogène ;
S¹ représente des espaceurs, comme un groupe alkylène à chaîne linéaire ou ramifiée, éventuellement substitué une fois ou plusieurs fois avec fluor, chlore ou cyano, dans ce qui suit représenté par -(CH₂)ᵣ-, ou une chaîne de formule -(CH₂)ᵣ-L¹-(CH₂)ₛ-L²-, dans laquelle L¹ et L² représentent indépendamment l'un de l'autre la simple liaison ou des groupes fonctionnels de couplage, comme O, COO, OOC, NR², NR²-CO-, CO-NR², NR²-COO, O-CO-NR², CH=CH, C≡C, dans lesquels R² est un hydrogène ou alkyle inférieur ;
r et s sont respectivement un nombre entier de 1 à 20, avec la condition que r + s ≤ 20 ;
le cycle A représente un 1,3- ou 1,4-phénylène, pyridine-2,5-diyle, pyrimidine-2,5-diyle, 1,3-dioxane-2,5-diyle, cyclohexane-1,4-diyle, pipéridine-1,4-diyle, pipérazine-1,4-diyle non substitué ou éventuellement substitué par fluor, chlore, cyano, alkyle ou alcoxy ;
le cycle B représente un 1,3- ou 1,4-phénylène, pyridine-2,5-diyle, pyrimidine-2,5-diyle, 1,4- ou 2,6-naphthylène, 1,3-dioxane-2,5-diyle, cyclohexane-1,4-diyle, non substitué ou éventuellement substitué par fluor, chlore, cyano, alkyle ou alcoxy ;
Y¹, Y² représentent indépendamment l'un de l'autre une simple liaison covalente, -(CH₂)ₜ-, -O-, -CO-, -CO-O-, -O-OC-, -NR³-, -CO-NR³-, -R³N-CO-, -(CH₂)ᵤ-O-, -O-(CH₂)ᵤ-, -(CH₂)ᵤ-NR³- ou -NR³-(CH₂)ᵤ-, dans lesquelles
R³ représente un hydrogène ou alkyle inférieur ;
t un nombre entier de 1 à 4 ;
u un nombre entier de 1 à 3 ;
m, n indépendamment l'un de l'autre 0 ou 1 ;
le cycle C représente un 1,3- ou 1,4-phénylène, pyrimidine-2,5- ou -3,5-diyle, pyridine-2,5- ou -2,4- ou -2,6-diyle, 2,5-thiophénylène, 2,5-furanylène, 1,4-ou 2,6-naphtylène, non substitué ou éventuellement substitué par fluor, chlore, cyano, alkyle ou alcoxy ;
Z représente -O- ou -NR⁴-, R⁴ étant un hydrogène ou alkyle inférieur, ou un deuxième groupe de formule D, dans laquelle
D représente un alkyle à chaîne linéaire ou ramifiée ayant 1 à 20 atomes de carbone éventuellement substitué par fluor ou chlore ou un reste cycloalkyle ayant 3 à 8 atomes de cycle éventuellement substitué par fluor, chlore, alkyle ou alcoxy.

2. Silanes de formule générale I selon la revendication 1, dans laquelle
X¹, X², X³, S¹, m et n ont la signification indiquée à is revendication 1 et
le cycle A représente un 1,3- ou 1,4-phénylène, pyridine-2,5-diyle, pyrimidine-2,5-diyle ou cyclohexane-1,4-diyle, non substitué ou éventuellement substitué par fluor, chlore, cyano, alkyle ou alcoxy ;
le cycle B représente un 1,3- ou 1,4-phénylène, pyridine-2,5-diyle, pyrimidine-2,5-diyle, 1,4- ou 2,6-naphthylène ou cyclohexane-1,4-diyle, non substitué ou éventuellement substitué par fluor, chlore, cyano, alkyle ou alcoxy ;
Y¹, Y² représentent indépendamment l'un de l'autre une simple liaison covalente,-CH₂-CH₂-, -O-, -CH₂-O-, -O-CH₂-, -CO-O- ou -O-OC- ;
le cycle C représente un 1,3- ou 1,4-phénylène, pyrimidine-2,5-diyle, pyridine-2,5-diyle, 2,5-furanylène ou 1,4- ou 2,6-naphtylène, non substitué ou éventuellement substitué par fluor, chlore, cyano, alkyle ou alcoxy ;
Z représente -O- ; et
D représente un alkyle à chaîne linéaire ou ramifiée ayant 1 à 20 atomes de carbone ou un reste cycloalkyle ayant 5 ou 6 atomes de cycle éventuellement substitué par alkyle ou alcoxy, en particulier par méthyle ou méthoxy.

3. Silanes de formule générale I selon la revendication 1 ou 2, dans lesquels
X¹, X², X³, S¹ et m ont la signification indiquée à la revendication 1 et
n est 0 ;
le cycle B représente un 1,3- ou 1,4-phénylène, pyridine-2,5-diyle, pyrimidine-2,5-diyle ou cyclohexane-1,4-diyle, non substitué ou éventuellement substitué par fluor, chlore, cyano, alkyle ou alcoxy ;
Y² représente une simple liaison covalente, -CO-O- ou -O-OC- ;
le cycle C représente un 1,3- ou 1,4-phénylène ou 1,4- ou 2,6-naphtylène, non substitué ou éventuellement substitué par fluor, chlore, cyano, alkyle ou alcoxy ;
Z représente -O- ; et
D représente un alkyle à chaîne linéaire ou ramifiée ayant 1 à 12 atomes de carbone.

4. Silanes selon la revendication 3 :
Ester méthylique d'acide (E)-3-[3-méthoxy-4-(4-triéthoxysilanylbutyloxy)phényl]-acrylique;
Ester 3-méthoxy-4-[(E)2-méthoxycarbonylvinyl]phénylique d'acide 4-(4-triéthoxysilanylbutyloxy)-benzoïque ;
Ester méthylique d'acide (E)-3-{2-méthoxy-4-[6-(3-triéthoxysilanylpropylcarbamoyloxy)hexyloxy]phényl}-acrylique ;
Ester méthylique d'acide (E)-3-{6-[6-(3-triéthoxysilanylpropylcarbamoyloxy)-hexyloxy]naphtalène-2-yle}-acrylique ;
Ester méthylique d'acide trans-(E)-3-{4'-[4-(4-triéthoxysilanylbutyl)cyclohexyl]-biphényl-4-yl)-acrylique ;
Ester 3-méthoxy-4-[(E)2-méthoxycarbonylvinyl]phénylique d'acide 4-(4-trichlorosilanylbutyloxy)benzoïque.

5. Mélanges réticulables constitués d'au moins 2 composants, parmi lesquels au moins un composant est un composé de la formule I définie à la revendication 1.

6. Mélanges réticulables selon la revendication 5, **caractérisés en ce qu'**ils contiennent en plus d'un ou plusieurs composés de formule I, un ou plusieurs composés de formule générale II, 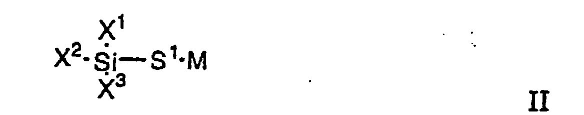 dans laquelle
X¹, X², X³, S¹ ont la signification indiquée à la revendication 1 et
M représente alkyle, alcoxy inférieur ou un reste mésogène de formule
générale III, 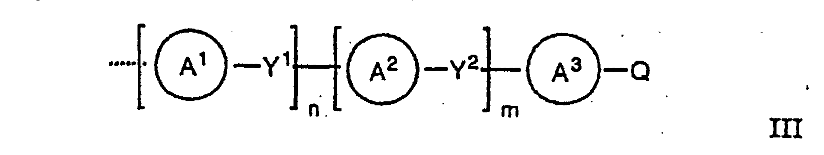 dans laquelle
Y¹, Y², m et n ont la signification indiquée à la revendication 1 et
A¹, A², A³ indépendamment les uns des autres représentent un phénylène, pyridine-2,5-diyle, pyrimidine-2,5-diyle, 2,6-naphtylène, 1,3-dioxane-2,5-diyle, cyclohexane-1,4-diyle, non substitué ou éventuellement substitué par fluor, chlore, cyano, alkyle ou alcoxy, dans lesquels au plus un des cycles est différent du phénylène ou du cyclohexylène ;
Q représente alkyle ou alcoxy inférieur, dans lequel un ou plusieurs atomes d'hydrogène peuvent être remplacés par un fluor, fluor, chlore, cyano ou nitro.

7. Mélanges réticulables selon la revendication 6, dans lesquels
n est 0 ;
m est 0 ou 1 ;
A² et A³ représentent indépendamment l'un de l'autre un phénylène ou cyclohexylène ;
Y² représente une simple liaison covalente, -CH₂CH₂-, -O-, -CH₂-O-, -O-CH₂-; -CO-O- ou -O-OC- et
Q représente un alkyle ou alcoxy inférieur éventuellement substitué par fluor, un fluor, chlore ou cyano.

8. Mélanges réticulables selon la revendication 7, dans lesquels
m est 0 ;
A³ représente un phénylène ou cyclohexylène ;
Q représente un alkyle ou alcoxy inférieur éventuellement substitué par fluor.

9. Utilisation de composés selon l'une des revendications 1 à 4 pour la fabrication de couches d'orientation pour cristaux liquides, ainsi que leur utilisation dans des composants optiques, en particulier pour la fabrication d'éléments à couches hybrides.

10. Utilisation de composés réticulables selon l'une des revendications 5 à 8 pour la fabrication de couches d'orientation pour cristaux liquides, ainsi que leur utilisation dans des composants optiques, en particulier pour la fabrication d'éléments à couches hybrides.
